# EUROPEAN PATENT APPLICATION

(11) **EP 4 841 924 A1**
(43) Date of publication of application: **18.11.2026**
(21) Application number: 25738447.9
(22) Date of filing: 08.01.2025
(51) Int. Cl.: H04L 5/00

(54) **REFERENCE SIGNAL SENDING METHOD AND APPARATUS, AND REFERENCE SIGNAL RECEIVING METHOD AND APPARATUS**

(30) Priority: 09.01.2024 CN 202410036933; 19.02.2024 CN 202410185464
(71) Applicant: Vivo Mobile Communication Co., Ltd., Dongguan, Guangdong 523863 (CN)
(72) Inventor: YANG, Yuming, Dongguan, Guangdong 523863 (CN); LI, Gen, Dongguan, Guangdong 523863 (CN); PU, Wenjuan, Dongguan, Guangdong 523863 (CN); CHEN, Xiaohang, Dongguan, Guangdong 523863 (CN)
(74) Representative: dompatent
(86) International application number: PCT/CN2025/071229
(87) International publication number: WO 2025/148918

(57) **Abstract**

The present application belongs to the technical field of wireless communications. Disclosed are a reference signal sending method and apparatus, and a reference signal receiving method and apparatus. The reference signal sending method in the embodiments of the present application comprises: a network-side device sending first information to a terminal, wherein the first information is used for instructing the network-side device to send a reference signal; and the network-side device sending the reference signal to the terminal.

## Description

### CROSS-REFERENCE TO RELATED APPLICATIONS

This disclosure claims priority to Chinese Patent Application No. 202410036933X, filed on January 9, 2024, and Chinese Patent Application No. 2024101854648, filed on February 19, 2024, which are incorporated herein by reference in their entireties.

### TECHNICAL FIELD

The present application pertains to the field of wireless communication technologies, and specifically relates to a method and apparatus for transmitting a reference signal and a method and apparatus for receiving a reference signal.

### BACKGROUND

Network energy saving is of great significance for environmental sustainability, reducing environmental impacts (such as the impact of greenhouse gas emissions on the environment), and saving operational costs. With the popularity of 5G across various industries and regions, and the widespread application of more advanced services and application programs requiring very high data rates (for example, Extended Range (XR)), networks have become denser, using more antennas, larger bandwidths, and more frequency bands. Therefore, in order to keep the environmental impact of 5G within a certain range, new solutions need to be developed to improve network energy saving.

In the related art, a network-side device (such as a base station) periodically transmits a synchronization signal block (synchronization signal (Synchronization Signal, SS)/physical broadcast channel (Physical Broadcast Channel, PBCH) block, SSB) to satisfy requirements such as synchronization and measurement of a terminal. However, periodic transmission of SSB is not beneficial for energy saving of the base station, especially a base station serving as a secondary cell (Scell). Therefore, how to transmit SSBs to achieve energy saving goal of the network-side device is a technical issue that needs to be addressed.

### SUMMARY

Embodiments of the present application provide a method and apparatus for transmitting a reference signal and a method and apparatus for receiving a reference signal.

According to a first aspect, a method for transmitting a reference signal is provided, performed by a network-side device. The method includes:
transmitting, by a network-side device, first information to a terminal; where the first information is configured to indicate transmission of a reference signal by the network-side device; and
transmitting, by the network-side device, the reference signal to the terminal.

According to a second aspect, a method for receiving a reference signal is provided, performed by a terminal. The method includes:
receiving, by the terminal, first information transmitted by a network-side device; where the first information is configured to indicate transmission of a reference signal by the network-side device; and
determining, by the terminal, according to the first information, whether to receive the reference signal transmitted by the network-side device.

According to a third aspect, an apparatus for transmitting a reference signal is provided, including:
a first transmitting module, configured to transmit first information to a terminal; where the first information is configured to indicate transmission of a reference signal by the network-side device; and
a second transmitting module, configured to transmit the reference signal to the terminal.

According to a fourth aspect, an apparatus for receiving a reference signal is provided, including:
a receiving module, configured to receive first information transmitted by a network-side device; where the first information is configured to indicate transmission of a reference signal by the network-side device; and
a determining module, configured to determine, according to the first information, whether to receive the reference signal transmitted by the network-side device.

According to a fifth aspect, a network-side device is provided. The network-side device includes a processor and a memory, where the memory stores a program or an instruction executable on the processor, and when the program or instruction is executed by the processor, the steps of the method according to the first aspect are implemented.

According to a sixth aspect, a network-side device is provided, including a processor and a communication interface, where:
the communication interface is configured to transmit first information to a terminal; where the first information is configured to indicate transmission of a reference signal by the network-side device; and
the processor is configured to transmit the reference signal to the terminal.

According to a seventh aspect, a terminal is provided. The terminal includes a processor and a memory, where the memory stores a program or an instruction executable on the processor, and when the program or instruction is executed by the processor, the steps of the method according to the second aspect are implemented.

According to an eighth aspect, a terminal is provided, including a processor and a communication interface, where
the communication interface is configured to receive first information transmitted by a network-side device; where the first information is configured to indicate transmission of a reference signal by the network-side device; and
the processor is configured to determine, according to the first information, whether to receive the reference signal transmitted by the network-side device.

According to a ninth aspect, a readable storage medium is provided, where a program or an instruction is stored on the readable storage medium, and when the program or instruction is executed by a processor, the steps of the method according to the first aspect are implemented, or the steps of the method according to the second aspect are implemented.

According to a tenth aspect, a wireless communication system is provided, including: a terminal and a network-side device, where the terminal is configured to perform the steps of the method according to the second aspect, and the network-side device is configured to perform the steps of the method according to the first aspect.

According to an eleventh aspect, a chip is provided, the chip including a processor and a communication interface, where the communication interface is coupled to the processor, and the processor is configured to run a program or an instruction to implement the method according to the first aspect, or implement the method according to the second aspect.

According to a twelfth aspect, a computer program/program product is provided, where the computer program/program product is stored in a storage medium, and the program/program product is executed by at least one processor to implement the steps of the method according to the first aspect or the steps of the method according to the second aspect.

In the embodiments of the present application, a network-side device transmits first information to a terminal, where the first information is configured to indicate transmission of a reference signal by the network-side device, and then the network-side device transmits the reference signal to the terminal, thereby implementing on-demand transmission of the reference signal, which can reduce power consumption of the network-side device and thus achieve network energy saving.

### BRIEF DESCRIPTION OF DRAWINGS

FIG. 1 is a block diagram of a wireless communication system to which embodiments of this application are applicable;
FIG. 2 is a schematic flowchart of a method for transmitting a reference signal according to embodiments of the present application;
FIG. 3 is a schematic flowchart of a method for receiving a reference signal according to embodiments of the present application;
FIG. 4 is a schematic diagram of triggering, by a base station, transmission of an on-demand SSB before SCell activation according to embodiments of the present application;
FIG. 5 is a first schematic diagram of reception timing of an SSB according to embodiments of the present application;
FIG. 6 is a second schematic diagram of reception timing of an SSB according to embodiments of the present application;
FIG. 7 is a schematic structural diagram of an apparatus for transmitting a reference signal according to embodiments of the present application;
FIG. 8 is a schematic structural diagram of an apparatus for receiving a reference signal according to embodiments of the present application;
FIG. 9 is a schematic structural diagram of a communication device according to embodiments of the present application;
FIG. 10 is a schematic diagram of a hardware structure of a terminal according to embodiments of this application; and
FIG. 11 is a schematic diagram of a hardware structure of a network-side device according to embodiments of this application.

### DESCRIPTION OF EMBODIMENTS

The following clearly describes the technical solutions in the embodiments of the present application with reference to the accompanying drawings in the embodiments of the present application. Apparently, the described embodiments are some but not all of the embodiments of the present application. Based on the embodiments of the present application, all other embodiments obtained by persons of ordinary skill in the art shall fall within the protection scope of the present application.

The terms "first", "second" and the like in the present application are used to distinguish similar objects and are not used to describe a specific order or sequence. It should be understood that the terms used in such a way may be interchangeable in appropriate circumstances such that the embodiments of the present application may be implemented in other orders than the order illustrated or described herein. In addition, objects distinguished by "first" and "second" are generally of the same type, and the quantities of the objects are not limited, for example, there may be one or more first objects. In addition, "or" in the present application indicates at least one of the connected objects. For example, "A or B" covers three schemes: scheme one: including A but not B; scheme two: including B but not A; scheme three: including both A and B. The character "/" generally indicates an "or" relationship between the associated objects before and after the character.

The term "indication" in the present application may be a direct indication (or explicit indication) or an indirect indication (or implicit indication). The direct indication may be understood as the sender explicitly informing the receiver of specific information, operations to be performed, or request results in the sent indication; the indirect indication may be understood as the receiver determining corresponding information according to the indication sent by the sender, or performing judgment and determining operations to be performed or request results according to the judgment result.

It is worth pointing out that the technology described in the embodiments of the present application is not limited to the long term evolution (Long Term Evolution, LTE)/LTE-Advanced (LTE-Advanced, LTE-A) systems, but may also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of the present application are often used interchangeably, and the technology described may be used in the systems and radio technologies mentioned above and other systems and radio technologies. In the following descriptions, a new radio (New Radio, NR) system is described for an illustration purpose, and NR terms are used in most of the following description, but these technologies may also be applied to systems other than NR systems, such as the 6^{th} Generation (6^{th} Generation, 6G) communication system.

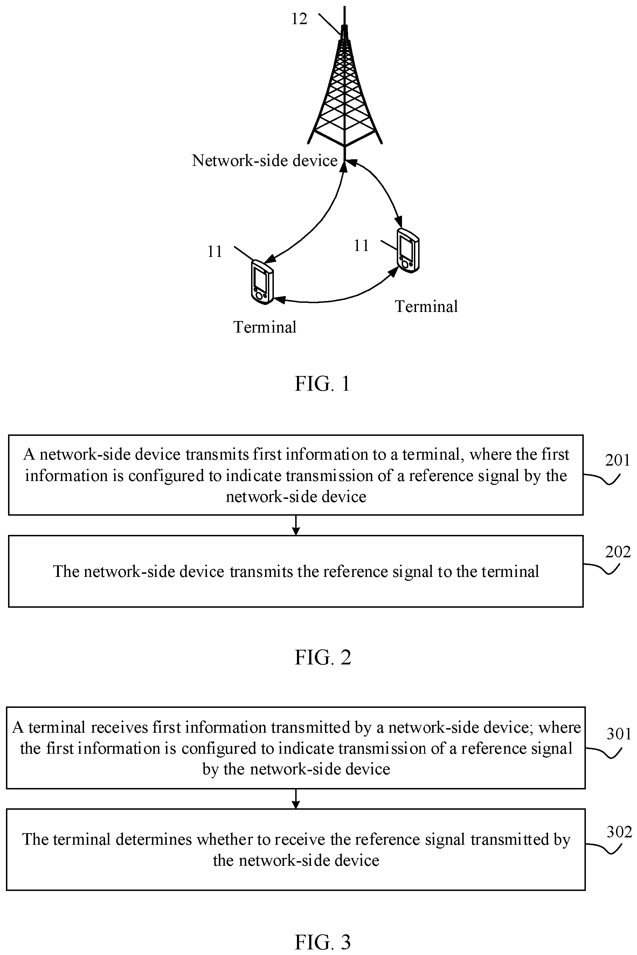

FIG. 1 is a block diagram of a wireless communication system to which embodiments of the present application are applicable. The wireless communication system includes a terminal 11 and a network-side device 12. The terminal 11 may be a terminal-side device, such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal computer, UMPC), a mobile Internet device (Mobile Internet Device, MID), an augmented reality (Augmented Reality, AR) device, a virtual reality (Virtual Reality, VR) device, a robot, a wearable device (Wearable Device), flight vehicle (flight vehicle), vehicle user equipment (Vehicle User Equipment, VUE), a ship-borne device, pedestrian user equipment (Pedestrian User Equipment, PUE), a smart appliance (a household device with a wireless communication function, for example, a refrigerator, a television, a washing machine, or furniture), a game console, a personal computer (Personal Computer, PC), a teller machine, or a self-service machine. The wearable device includes a smart watch, a smart band, a smart earphone, smart glasses, smart jewelry (a smart bangle, a smart bracelet, a smart ring, a smart necklace, a smart anklet, a smart chain anklet, or the like), a smart wristband, smart clothing, or the like. The vehicle user equipment may also be called vehicle terminal, vehicle controller, vehicle module, vehicle component, vehicle chip, vehicle unit, or the like. It should be noted that the specific type of the terminal 11 is not limited in the embodiments of the present application. The network-side device 12 may include an access network device or core network device, where the access network device may also be referred to as radio access network (Radio Access Network, RAN) device, radio access network function, or radio access network unit. The access network device may include a base station, a wireless local area network (Wireless Local Area Network, WLAN) access point (Access Point, AP), a wireless fidelity (Wireless Fidelity, WiFi) node, or the like. The base station may be referred to as Node B (Node B, NB), evolved Node B (Evolved Node B, eNB), next generation Node B (the next generation Node B, gNB), new radio Node B (New Radio Node B, NR Node B), access point, relay base station (Relay Base Station, RBS), serving base station (Serving Base Station, SBS), base transceiver station (Base Transceiver Station, BTS), radio base station, radio transceiver, basic service set (Basic Service Set, BSS), extended service set (Extended Service Set, ESS), home Node B (home Node B, HNB), home evolved Node B (home evolved Node B), transmission reception point (Transmission Reception Point, TRP), or another appropriate term in the field. Provided that the same technical effects are achieved, the base station is not limited to a specific technical term. It should be noted that in the embodiments of the present application, the base station in the NR system is merely used as an example for introduction, and the specific type of the base station is not limited.

To facilitate a clearer understanding of the technical solutions provided in the embodiments of the present application, some related knowledge is introduced below.

Regarding the known (known) and unknown (unknown) status of a cell:

If the following conditions are satisfied, a secondary cell (SCell) in a FR1 band is known:
1. Before reception of an SCell activation command, within a period in FR1 equal to max(5 × mesCycleSCell, 5 × DRX cycle):
   1-1. A terminal has transmitted a valid measurement report for an SCell to be activated; and
   1-2. An SSB that has been measured remains detectable according to specified cell identification conditions;
   where mesCycleSCell represents the measurement cycle of the SCell; and DRX refers to discontinuous reception (Discontinuous Reception);
2. According to the specified cell identification conditions, the SSB measured during a period equal to max(5 × mesCycleSCell, 5 × DRX cycle) remains detectable during an SCell activation delay period;
   otherwise, the SCell in FR1 is unknown.

For activation of a first SCell in a FR2 band, if the following conditions are satisfied, the SCell is known:
1. during a period equal to 4s for a terminal supporting power class 1/5 and 3s for a terminal supporting power class 2/3/4 before the terminal receives a last activation command for physical downlink control channel (Physical Downlink Control Channel, PDCCH) transmission configuration indicator (Transmission Configuration Indicator, TCI), physical downlink shared channel (Physical Downlink Shared Channel, PDSCH) TCI (when applicable), and semi-persistent channel state information reference signal (Channel State Information Reference Signal, CSI-RS) (when applicable) for channel quality indicator (Channel Quality Indicator, CQI) reporting:
   1-1. the terminal has transmitted a valid L3-reference signal received power (Reference Signal Received Power, RSRP) measurement report with SSB index; and
   1-2. an SCell activation command is received after the L3-RSRP reporting and no later than the time when the terminal receives a MAC-CE command for TCI activation;
2. during the period from L3-RSRP reporting to the valid CQI reporting, the reported SSBs with indexes remain detectable according to the specified cell identification conditions, and the TCI state is selected based on one of the latest reported SSB indexes;
   otherwise, the first SCell in FR2 is unknown.

The following describes in detail a method and apparatus for transmitting a reference signal and a method and apparatus for receiving a reference signal provided in embodiments of the present application by using some embodiments and application scenarios thereof with reference to the accompanying drawings.

FIG. 2 is a schematic flowchart of a method for transmitting a reference signal according to embodiments of the present application. The method is performed by a network-side device. As shown in FIG. 2, the method includes step 201 and step 202 as follows:
step 201: the network-side device transmits first information to a terminal; where the first information is configured to indicate transmission of a reference signal by the network-side device; and
step 202: the network-side device transmits the reference signal to the terminal.

It should be noted that the network-side device may include a network-side device on a satellite, such as a base station on a satellite, or may include a terrestrial network-side device, such as a terrestrial base station.

Optionally, the reference signal may include at least one of a downlink reference signal, a downlink synchronization signal, a synchronization signal, an SSB burst, an SSB, or an on-demand reference signal. The on-demand reference signal is, for example, an on-demand SSB (On-demand SSB).

For example, the downlink reference signal may further include at least one of a CSI-RS, a demodulation reference signal (Demodulation Reference Signal, DMRS), a tracking reference signal (Tracking Reference Signal, TRS), an aperiodic TRS, or a phase-tracking reference signal (Phase-Tracking Reference Signal, PTRS).

It may be understood that the on-demand reference signal is a reference signal transmitted by the network-side device according to a demand of the network side or a demand of the terminal. The network side may adapt from a non-transmission state to a transmission state, or from one transmission state to another transmission state, such as different transmission periods, or additional reference signal transmission.

Optionally, the transmitting, by a network-side device, first information to a terminal includes: transmitting, by the network-side device, the first information to the terminal on a first frequency.

Implementation manners in which the network-side device transmits the reference signal to the terminal may include at least one of the following:
manner 1: transmitting, by the network-side device, the reference signal to the terminal on a first frequency/a first carrier/a first serving cell/in a first serving cell group/a primary cell/a primary cell group/a primary-secondary cell; or
manner 2: transmitting, by the network-side device, the reference signal to the terminal on a second frequency/a second carrier/in a second serving cell/a second serving cell group/a secondary cell/a secondary cell group. For example, the second carrier may be a carrier or a carrier group including a plurality of carriers.

It may be understood that the first frequency may also be expressed as concepts such as a first carrier, a first cell, or a first cell group.

It may be understood that the first frequency may also be expressed as concepts such as a second carrier, a second cell, or a second cell group.

The network-side device transmitting the first information and the network-side device transmitting the reference signal may be a same device or different devices. For example, the network-side device transmitting the first information may be a network-side device of a primary cell, and the network-side device transmitting the reference signal may be a network-side device of a secondary cell.

In the embodiments of the present application, a network-side device transmits first information to a terminal, where the first information is configured to indicate transmission of a reference signal by the network-side device, and then the network-side device transmits the reference signal to the terminal, thereby implementing on-demand transmission of the reference signal, which can reduce power consumption of the network-side device and thus achieve network energy saving.

Optionally, the reference signal may be predefined by a protocol/preconfigured by a network side/configured by a network side.

Optionally, the first information is indicated according to at least one of the following granularities:
1. a serving cell (Serving cell);
2. a serving cell group;
3. a reference signal frequency point, for example, an SSB frequency point or an SSB frequency point group;
4. a reference signal frequency point group;
5. a physical cell identifier (Physical Cell Identifier, PCI);
6. a PCI group;
7. a measurement object (Measurement Object, MO);
8. a measurement object group;
9. a beam; or
10. a beam group.

For example, the first information is indicated according to the following granularity: SSB frequency point + PCI, or SSB frequency point + PCI group.

Alternatively, the first information is indicated according to the following granularity: a group (SSB frequency point + PCI, or SSB frequency point + PCI group).

Optionally, the first information is carried by at least one of the following.

### I. Downlink control information (Downlink Control Information, DCI)

Specifically, the DCI may be at least one of the following.
1. User equipment specific DCI (UE specific DCI); where
   the UE specific DCI satisfies at least one of the following:
   (1) relevant information of the first information in the UE specific DCI may be configured by the network-side device;
      optionally, the relevant information of the first information may alternatively be predefined by a protocol or preconfigured by the network side. That is, the UE specific DCI may not carry the relevant information of the first information;
   (2) the UE specific DCI includes the relevant information of the first information; or
   (3) the UE specific DCI includes a first indication field configured to indicate the first information.

The relevant information of the first information includes at least one of the following: whether the UE specific DCI or the terminal supports transmission of an on-demand reference signal; information of a cell or cell group supporting an on-demand reference signal; or on-demand reference signal transmission configuration information.

Example 1: The first information is carried in single-cell (cell) uplink scheduling DCI such as DCI 0_0/0_1/0_2, or carried in single-cell downlink scheduling DCI such as DCI 1_0/1_1/1_2. The DCI may be scheduling DCI or non-scheduling DCI. Optionally, the first information or the relevant information of the first information satisfies at least one of the following:
(a) the network side configures the relevant information of the first information, including at least one of whether the DCI or the terminal supports an on-demand SSB function, configuration information of indication granularity supporting the on-demand SSB, or on-demand SSB transmission configuration information, and determines a size of a related indication field of the first information in the DCI according to this information; or
(b) some fields in the DCI are used to validate (validate) the DCI as non-scheduling DCI, and in this case, some of the fields therein are repurposed (repurpose) to indicate the first information, while a mapping relationship between an indication field and an indication granularity is determined according to the relevant information of the first information configured by the network side (for example, the relevant information of the first information configured by the network side in (a)).

Optionally, the on-demand SSB may alternatively be expressed as the foregoing reference signal.

Example 2: The first information is carried in multi-cell (multi-cell) scheduling DCI such as DCI 0_3 or 1_3. The DCI may be scheduling DCI or non-scheduling DCI. Optionally, the first information or the relevant information of the first information satisfies at least one of the following:
(a) the network side configures the relevant information of the first information, including at least one of whether the DCI or the terminal supports an on-demand SSB function, information of a cell or cell group (cell group) supporting the on-demand SSB, or on-demand SSB transmission configuration information, and determines a size of a first information field in the DCI according to this information; or
(b) some fields in the DCI are used to validate the DCI as non-scheduling DCI, and in this case, some of the fields therein are repurposed to indicate the first information, and a mapping relationship between an indication field and a cell/cell group is determined according to the relevant information of the first information configured by the network side (for example, the relevant information of the first information configured by the network side in (a)).

### 2. Group common DCI (Group common DCI)

Optionally, a new group common DCI is used.

Optionally, the on-demand SSB may alternatively be expressed as the foregoing reference signal.

The group common DCI satisfies at least one of the following:
(1) a cyclic redundancy check (Cyclic Redundancy Check, CRC) of the group common DCI is scrambled by a radio network temporary identifier (Radio Network Temporary Identifier, RNTI) identifying the reference signal. For example, the RNTI indicates that the DCI is related to triggering or indicating the on-demand SSB;
(2) one block in the group common DCI corresponds to one specific terminal;
   for example, SSBs for different purposes are triggered for different terminals, and indication information is embodied in the block;
(3) one block in the group common DCI corresponds to one granularity. The granularity is at least one of a terminal, a terminal group, a beam, a beam group, a serving cell, a serving cell group, a reference signal frequency point, a reference signal frequency point group, a PCI, a PCI group, a measurement object, or a measurement object group; or
(4) the group common DCI is configured to indicate at least one of the following: transmission of the reference signal; triggering transmission of the reference signal; cell activation; cell deactivation; synchronization; or measurement. For example, the DCI is used both to trigger transmission of the SSB and indicate activation of a cell.

Optionally, the group common DCI includes a second indication field, configured to indicate that the group common DCI includes the first information; where the reference signal of the serving cell corresponding to the group common DCI is transmitted in an on-demand transmission mode.

Optionally, a unified indication is used to indicate whether a reference signal is triggered for a terminal receiving the indication and/or whether the reference signal is used for cell activation/dormancy indication. For example, determination is made according to relevant information such as a cell ID.

Optionally, in a case that one block in the group common DCI corresponds to one granularity, the block includes at least one of the following:
a third indication field, configured to indicate whether to transmit the reference signal; or
a fourth indication field, configured to indicate a type of the reference signal.

For example, each block uses 1 bit to indicate whether to transmit the reference signal.

For another example, each block indicates which type of reference signal is transmitted. For example, indication is performed by a plurality of bits or a bitmap.

The network side configures/indicates, for each terminal (per UE) or some terminals, which block(s) in the DCI are to be read by the terminal, or the network side configures/indicates, for each terminal or some terminals, a granularity corresponding to the terminal.

It should be noted that different blocks may correspond to a same indication granularity or different indication granularities. For example, one block may correspond to a serving cell, and another block may correspond to an MO ID or an SSB frequency (SSB frequency).

Optionally, an existing group common DCI, for example, DCI 2_9, is reused.

Specifically, whether a corresponding serving cell is indicated by the first information is determined according to at least one of the following:
(a) explicitly configuring whether the first information is present; for example, using 1 bit for indication; or
(b) configuring an on-demand SSB transmission mode for the serving cell;

If the first information is present, whether to transmit the SSB and/or a SSB transmission configuration is indicated.

For indication granularities (such as MO or SSB frequency) corresponding to non-serving cells, separate configuration is performed for separate blocks.

### II. Medium access control control element (Medium Access Control Control Element, MAC CE)

Optionally, the MAC CE is configured for at least one of the following:
(1) activating transmission of the reference signal;
   for example, the MAC CE is used to activate transmission of an SSB;
(2) deactivating transmission of the reference signal;
   for example, the MAC CE is used to activate a secondary cell (Secondary Cell, SCell) and corresponding SSB transmission. The SSB transmission may be used for fast cell activation, that is, an SSB provided in advance for measurement by the terminal, or may be periodic SSB transmission or on-demand SSB transmission after cell activation;
(3) activating a serving cell;
(4) deactivating a serving cell;
(5) activating transmission of a reference signal corresponding to the serving cell;
(6) deactivating transmission of a reference signal corresponding to the serving cell;
(7) activating transmission of an aperiodic tracking reference signal (Aperiodic Tracking Reference Symbol, A-TRS); or
(8) deactivating transmission of the A-TRS.

For example, the MAC CE is used to activate the SCell, the A-TRS, and corresponding SSB transmission.

For another example, the MAC CE is used to activate transmission of an SSB and an A-TRS.

Optionally, a cell transmitting the SSB is indicated in the MAC CE by a cell ID.

Optionally, a new MAC CE is defined for transmitting the first information.

Optionally, an existing MAC CE is reused, and a new indication field is added or some indication fields are repurposed to indicate the first information. For example, a MAC CE for cell activation is reused.

### III. Radio resource control (Radio Resource Control, RRC) message

Optionally, secondary cell configuration information or secondary cell addition information in the RRC message serves as the first information;
or, secondary cell configuration information or secondary cell addition information in the RRC message includes the first information.

Optionally, after receiving addition information of a secondary cell, the terminal receives an SSB according to a predefined rule or at a predefined location, that is, when an SCell is added through RRC signaling, an SSB is implicitly activated, or activation of the SSB is explicitly indicated by the network.

Optionally, the first information is carried as network-side configuration information in secondary cell configuration information or secondary cell addition information, that is, the network side explicitly configures or indicates the first information.

Optionally, the network side transmits the first information to trigger transmission of a reference signal, such as transmission of an SSB. The first information includes at least one of the following.
(1) First indication information, configured to indicate transmission or cancellation of transmission of the reference signal.

The first indication information, for example, 1 bit, is configured to indicate transmission/cancellation of transmission of the SSB.

Optionally, in this case, relevant information of the SSB is preconfigured by the RRC or predefined.

Optionally, the first indication information may be implemented specifically in the form of a bitmap, where cells in the bitmap correspond to cells configured for the terminal. In this case, a bit order in the bitmap may be determined according to an order of cell IDs, an order in which cells are configured, or the like.

(2) Second indication information, configured to indicate whether the reference signal is configured for at least one of the following: cell activation, cell deactivation, synchronization, or measurement.

The second indication information, for example, 1 bit, is configured to indicate whether the SSB is used for cell activation/dormancy, or for synchronization or measurement, or the like, so as to prevent the terminal from mistakenly considering that cell activation is indicated and starting a detection operation, leading to power consumption, or mistakenly considering that the terminal is indicated to perform measurement, thereby reporting measurement information or the like.

Optionally, the second indication information may further indicate whether an A-TRS signal will be transmitted, or, when cell activation is indicated, indicate whether an A-TRS signal will also be transmitted.

(3) Third indication information, configured to indicate whether the reference signal is a cell-defining reference signal or a non cell-defining reference signal.

For example, the third indication information indicates whether the SSB is a cell-defining SSB (cell-defining SSB) or a non cell-defining SSB (non cell-defining SSB).

### (4) Information of a cell or cell group associated with the reference signal.

Optionally, the first information directly indicates a cell index. Alternatively, the first information is indicated by a bitmap, where cells in the bitmap correspond to cells configured/activated for the terminal, and an order of bits corresponds to a configuration/activation order of the cells or an order of cell indexes.

### (5) Information of a measurement object MO, measurement ID, or MO group associated with the reference signal.

For example, the first information includes MO/measurement identifier (ID) or MO group information associated with the SSB.

### (6) Information of a frequency point or frequency point group of the reference signal.

### (7) Information of a PCI or PCI group associated with the reference signal.

It may be understood that items (4) to (7) exemplify association granularities of the reference signal. The association granularity may be at least one of a terminal, a terminal group, a beam, a beam group, a serving cell, a serving cell group, a reference signal frequency point, a reference signal frequency point group, a PCI, a PCI group, a measurement object, or a measurement object group.

### (8) Quasi Co-Location (Quasi Co-Location, QCL).

The QCL information includes at least one of the following: a QCL source or a QCL type.

For example, the QCL information indicates QCL with one SSB/reference signal RS from a primary cell (Primary cell, PCell) (QCL with one SSB/RS from PCell), or QCL with one SSB/RS from one active secondary cell (one SSB/RS from one active SCell). It may be understood that the reference signal is quasi co-located with an indicated reference signal.

For example, the QCL type includes at least one of QCL-A, QCL-B, QCL-C, or QCL-D.

For example, the reference signal, or one of the reference signals, transmitted by the network side, is quasi co-located with a reference signal of the primary cell.

### (9) Transmission configuration indicator (Transmission Configuration Indicator, TCI) information.

### (10) A time domain pattern.

The time domain pattern includes at least one of the following: an index of the reference signal; a starting position of the reference signal; or a length of a receiving time window of the reference signal.

(11) Fourth indication information, configured to indicate that the reference signal is transmitted in a repetition (repetition) or beam sweeping (beam sweeping) manner.

For example, the fourth indication information indicates that the SSB is transmitted in a repetition or beam sweeping manner. For example, the fourth indication information is indicated by 1 bit.

It may be understood that the repetition transmission herein may refer to repetition of an SSB with a certain index, or transmission of SSBs with certain indexes, rather than transmission of all SSBs. The beam sweeping transmission refers to transmission of all SSB indexes within an SSB period.

Optionally, the fourth indication information is inferred from at least one of the following information: whether QCL information is indicated; whether the reference signal is used for cell activation/dormancy; whether the reference signal is transmitted through group common signaling. For example, if QCL information is indicated, the SSB may be regarded as a repetition. If transmitted through group common signaling, the SSB may be regarded as being transmitted in a beam sweeping manner.

### (12) Frequency domain information of the reference signal.

The frequency domain information of the reference signal includes a position of a synchronization raster (Sync raster) or a frequency domain offset value of a synchronization raster relative to a certain frequency point or a certain signal position. Optionally, the network preconfigures/configures a plurality of sync rasters, and one of the sync rasters is indicated by indication information.

### (13) A time offset for transmitting or receiving the reference signal.

Optionally, the time offset for transmitting or receiving the reference signal is a time offset relative to a transmission/reception time instant of the first information, or a time offset relative to a transmission/reception time instant of feedback information. It may be understood that the feedback information indicates that the terminal correctly receives the first information.

For example, if transmission of a same reference signal is indicated through different base stations, the timings of different base stations may be different. In this case, a time offset is required to unify the transmission or reception timing of the reference signal as recognized by the terminal.

### (14) A numerology of the reference signal.

For example, the numerology of SSB includes 15 kHz.

Optionally, implementation manners in which the network-side device transmits the reference signal to the terminal in step 202 includes: transmitting, by the network-side device, the reference signal to the terminal when a first condition is satisfied; where the first condition includes at least one of the following:
(1) the network-side device activates a secondary cell corresponding to a second frequency;
(2) the network-side device indicates deactivation of a secondary cell corresponding to a second frequency;
(3) a first time interval since the network-side device transmitted a previous reference signal is greater than or equal to a first threshold;
   for example, a time gap since the network-side device transmitted a previous SSB is greater than a first threshold. It may be understood that the SSB is transmitted at intervals;
(4) a timer related to transmission of the reference signal expires; it may be understood that the transmission time of the SSB is determined according to the timer;
(5) the network-side device switches from a sleep state to an active state; it may be understood that the network-side device may not transmit an SSB in the sleep state, and to avoid possible loss of synchronization of the terminal, the SSB is transmitted for terminal synchronization. The loss of synchronization means that the terminal loses an uplink/downlink synchronization state;
(6) the network-side device detects that a terminal has lost synchronization;
(7) the network-side device triggers the terminal to report measurement information. It may be understood that the network side requires cell measurement information of the terminal; or
(8) the network-side device detects through measurement that at least one of reference signal quality, reference signal strength, reference signal energy, channel quality indicator (Channel Quality Indicator, CQI), or quality of service (Quality of Service, QoS) of at least some terminals is less than a threshold. Optionally, the threshold is predefined by a protocol, preconfigured by the network-side device, or configured by the network-side device.

Optionally, the method for transmitting an on-demand reference signal provided in the embodiments of the present application further includes: monitoring, by the network-side device, feedback information of the terminal on a first frequency, such as hybrid automatic repeat request acknowledgment (Hybrid Automatic Repeat reQuest Acknowledgment, HARQ-ACK), where the feedback information is configured to indicate whether the terminal correctly receives the first information.

Optionally, in a case that the received feedback information is ACK, the network-side device determines that the terminal correctly receives the first information;
In a case that the received feedback information is NACK, the network-side device determines that the terminal does not correctly receive the first information.

In a case that ACK feedback information is not received, the network-side device determines that the terminal does not correctly receive the first information.

In a case that NACK feedback information is not received, the network-side device determines that the terminal correctly receives the first information.

Optionally, a resource position for reporting the feedback information is indicated by DCI or preconfigured by the network-side device.

For example, a physical uplink control channel (Physical Uplink Control Channel, PUCCH) resource position for reporting HARQ-ACK information is indicated by DCI.

Optionally, the PUCCH resource position for reporting HARQ-ACK information is preconfigured by the network-side device. The PUCCH resource is independently configured, or is independently configured when used for a NACK-only mechanism. For example, a PUCCH resource for reporting HARQ-ACK information is configured at a time domain position spaced apart from the transmission time instant of the first information by a second time interval.

The second time interval between the resource position and the first information is less than or equal to a second threshold, or the second time interval is indicated by DCI, preconfigured by the network-side device, or predefined by a protocol.

Optionally, the transmitting, by the network-side device, the reference signal to the terminal in step 202 includes: transmitting, by the network-side device, the reference signal to the terminal on a second frequency starting from a P-th first time unit thereon that overlaps or partially overlaps with a first time instant; or transmitting, by the network-side device, the reference signal to the terminal on the second frequency no earlier than the first time instant.

Optionally, the P-th time unit is the first or last first time unit on the second frequency overlapping or partially overlapping with the first time instant.

Specifically, the first time instant is a time instant of a primary cell or an active cell corresponding to the first frequency. The starting boundary of the first or last first time unit overlaps or partially overlaps with the first time unit.

The first time instant is slot n+k; where n is a transmission time instant of the first information, or a transmission time instant or a reception time instant of the feedback information of the terminal.
k includes at least one of the following: a processing time of feedback information (such as HARQ-ACK) on the first frequency; a second processing time; a time offset configured by RRC; or a time offset indicated by the first information.

The second processing time is predefined by a protocol or reported by the terminal.

It may be understood that the cell timing on the first frequency and the second frequency may not be completely synchronized. Therefore, a time at which the network-side device transmits the SSB on the second frequency needs to be further determined according to the first time instant determined on the first frequency.

Optionally, taking effect of information indicated by the first information satisfies at least one of the following:
(1) taking effect immediately in a current period;
(2) taking effect starting after a second time unit;
(3) taking effect starting at the transmission time instant of the first reference signal in a next period; or
(4) taking effect in an X-th period after the current period; where X is an integer greater than 0.

For example, after the network-side device indicates adaptive change of the SSB, including switching from not transmitting the SSB to transmitting the SSB, or switching from one SSB pattern to another SSB pattern, taking effect of information indicated by the first information satisfies at least one of the above (1) - (4).

Optionally, in a case that the first information is configured to indicate transmission of an A-TRS, the first information is configured to activate transmission of the reference signal implicitly, or activate transmission of the reference signal explicitly, for example, by additionally carrying some information of the reference signal; or
in a case that the first information is configured to indicate transmission of the reference signal, the first information is configured to activate transmission of an A-TRS of a serving cell corresponding to the reference signal implicitly, or activate transmission of an A-TRS of a serving cell corresponding to the reference signal explicitly, for example, by carrying an A-TRS ID and/or an SCell index; where
the first information includes indication information of the A-TRS, such as a TRS ID and/or an SCell index; and
a transmission time of the reference signal is before or after a transmission time of the A-TRS.

Optionally, the network-side device transmits both the A-TRS and the SSB, or transmits only one of them.

Optionally, the transmitting, by the network-side device, the reference signal to the terminal in step 202 includes: in a case that a second condition is satisfied, transmitting, by the network-side device, the reference signal to the terminal on a first frequency or a second frequency according to a default reference signal pattern (pattern) or a conventional reference signal pattern or a reference signal pattern before transmission of the reference signal; where
the second condition includes at least one of the following:
(1) an activation procedure of a serving cell corresponding to the second frequency is completed;
(2) a first preset duration has elapsed since activation of a serving cell corresponding to the second frequency; optionally, the serving cell corresponding to the second frequency is activated by the network-side device transmitting a MAC CE;
(3) a second preset duration has elapsed since the network-side device transmitted the first information; or
(4) a third preset duration has elapsed since the network-side device transmitted the reference signal.

Optionally, the first preset duration, the second preset duration, and the third preset duration may be predefined by a protocol, configured or indicated by the network-side device.

Optionally, the transmitting, by the network-side device, the reference signal to the terminal in step 202 includes: transmitting the reference signal to the terminal after the network-side device receives trigger information from the terminal; where
the trigger information from the terminal includes identification information of the network-side device.

The identification information of the network-side device may be a cell ID, a frequency point corresponding to the cell, a frequency point of an on-demand SSB, or other information usable for identifying the network-side device.

It may be understood that when the terminal transmits trigger information to trigger transmission of a reference signal of a target cell, since the target cell may not yet be activated, or the terminal needs to enable the network side to know an object being triggered, the identification information of the target cell needs to be carried in the trigger information, such as a cell ID, a frequency point corresponding to the cell, or a frequency point of an on-demand SSB.

Optionally, before the network-side device transmits the reference signal to the terminal, the method further includes: indicating, by the network-side device, that the terminal is allowed to transmit trigger information.

It may be understood that whether the terminal is allowed to transmit trigger information for triggering a reference signal depends on permission from the network side. After the network side indicates that the terminal is allowed to transmit related trigger information, the terminal is allowed to transmit trigger information for triggering a reference signal.

FIG. 3 is a schematic flowchart of a method for receiving a reference signal according to embodiments of the present application. The method is performed by a terminal. As shown in FIG. 3, the method includes step 301 and step 302, where:
step 301: The terminal receives first information transmitted by a network-side device; where the first information is configured to indicate transmission of a reference signal by the network-side device; and
step 302: the terminal determines, according to the first information, whether to receive the reference signal transmitted by the network-side device.

For example, if the first information indicates transmission, the terminal receives the reference signal.

For example, if the terminal needs to perform synchronization or measurement, the terminal receives the reference signal; otherwise, the terminal does not receive the reference signal.

For another example, if an SSB granularity or a transmission purpose (such as including the terminal ID) indicated by the first information includes or matches the terminal, the terminal receives the reference signal; otherwise, the terminal does not receive the reference signal.

For yet another example, the terminal receives the reference signal at a transmission time indicated by the first information, and does not receive the reference signal after the transmission time expires.

Optionally, the reference signal may include at least one of a downlink reference signal, a downlink synchronization signal, a synchronization signal, an SSB burst, an SSB, or an on-demand reference signal.

Optionally, the first information includes at least one of the following:
(1) first indication information, configured to indicate transmission or cancellation of transmission of the reference signal;
(2) second indication information, configured to indicate whether the reference signal is configured for at least one of the following: cell activation, cell deactivation, synchronization, or measurement;
(3) third indication information, configured to indicate whether the reference signal is a cell-defining reference signal or a non cell-defining reference signal;
(4) information of a cell or cell group associated with the reference signal;
(5) information of a MO, measurement ID, or MO group associated with the reference signal;
(6) information of a frequency point or frequency point group of the reference signal;
(7) information of a PCI or PCI group associated with the reference signal;
(8) QCL information;
(9) TCI information;
(10) a time domain pattern;
(11) fourth indication information, configured to indicate that the reference signal is transmitted in a repetition or beam sweeping manner;
(12) frequency domain information of the reference signal;
(13) a time offset for transmitting or receiving the reference signal; or
(14) a numerology of the reference signal; where

the QCL information or TCI information includes at least one of the following: a QCL source or a QCL type; and
the time domain pattern includes at least one of the following: an index of the reference signal; a starting position of the reference signal; or a length of a receiving time window of the reference signal.

In the embodiments of the present application, the terminal receives first information transmitted by a network-side device; where the first information is configured to indicate transmission of a reference signal by the network-side device; and the terminal determines whether to receive the reference signal transmitted by the network-side device, thereby implementing on-demand transmission of the reference signal, which can reduce power consumption of the network-side device and thus achieve network energy saving.

Optionally, the terminal receiving first information transmitted by a network-side device includes: receiving, by the terminal, the first information transmitted by the network-side device on a first frequency.

Optionally, in a case that the terminal determines to receive the reference signal transmitted by the network-side device, the terminal receives the reference signal transmitted by the network-side device.

Optionally, the terminal receiving the reference signal transmitted by the network-side device includes:
receiving, by the terminal, the reference signal transmitted by the network-side device on the first frequency or a second frequency.

Optionally, the terminal performs a target operation based on the reference signal, where the target operation includes at least one of the following: synchronization, measurement, or reporting.

Optionally, the method further includes: transmitting, by the terminal, feedback information on a resource corresponding to the first frequency; where the feedback information is configured to indicate whether the terminal correctly receives the first information.

In a case that the terminal correctly receives the first information on the first frequency, the feedback information is ACK. For example, when the terminal correctly receives signaling triggering/indicating SSB transmission on a first carrier, the terminal feeds back ACK on a corresponding PUCCH/PUSCH resource.

Alternatively, in a case that the terminal does not correctly receive the first information on the first frequency, the feedback information is NACK.

Optionally, the terminal receiving the reference signal transmitted by the network-side device includes at least one of the following:
detecting, by the terminal, the reference signal starting from a starting boundary or ending boundary corresponding to a first time instant;
detecting, by the terminal, the reference signal starting from a second time instant;
detecting, by the terminal, the reference signal starting on the first frequency or the second frequency from a position offset by T time units from a third time instant or a fourth time instant on the first frequency; where T is predefined by a protocol, indicated by the network-side device, preconfigured by the network-side device, or configured by the network-side device; or
receiving, by the terminal, the reference signal on the second frequency within a first time window.

Specifically, (1) the terminal detects the reference signal starting from a starting boundary or ending boundary corresponding to a first time instant.

For example, in a case that a cell corresponding to the second frequency is an unknown (Unknown) cell, and that the terminal receives the first information at a third time instant on the first frequency, the terminal detects the reference signal starting from a starting boundary or ending boundary corresponding to the first time instant. Optionally, for an action related to a CSI report/synchronization performed on a cell corresponding to the second frequency is at slot n+k or begins from slot n+k.

Optionally, the first time instant is a time instant of a primary cell or an active cell corresponding to the first frequency.

A starting boundary of the first or last first time unit overlaps or partially overlaps with the first time instant.

Optionally, the first time instant is slot n+k; where
n is a transmission time instant of the first information, or a transmission time instant or a reception time instant of feedback information of the terminal; and
k includes at least one of the following:
   a processing time of feedback information on the first frequency;
   a second processing time;
   a time offset configured by RRC; or
   a time offset indicated by the first information; where
   the second processing time is predefined by a protocol or reported by the terminal.

(2) The terminal detects the reference signal starting from a second time instant.

For example, in a case that a cell corresponding to the second frequency is a known cell, and that the terminal receives the first information at a fourth time instant on the first frequency, the terminal detects the reference signal starting from the second time instant.

Optionally, for an action related to a CSI report/synchronization performed on the cell corresponding to the second frequency, the cell is activated at slot n1+k1.

(3) The terminal detects the reference signal starting from a position offset by T time units from a third time instant or a fourth time instant on the first frequency; where T is predefined by a protocol, indicated by the network-side device, preconfigured by the network-side device, or configured by the network-side device.

(4) The terminal receives the reference signal on the second frequency within a first time window.

Optionally, the fourth time instant is slot n1;

The second time instant is slot n1+k1. The slot n1 is a time instant of a cell on the second frequency corresponding to the terminal receiving the first information or transmitting feedback information; and the slot n1+k1 is a time instant of the cell corresponding to the second frequency.
k1 includes at least one of the following: a processing time for the feedback information or a third processing time; where the third processing time is predefined by a protocol and is related to a subcarrier spacing (sub-carrier spacing, SCS) of the cell corresponding to the second frequency.

Optionally, a starting position of the first time window is determined based on at least one of the following:
(1) the first time instant;
(2) the second time instant; or
(3) a position offset by T time units from the third time instant or the fourth time instant; where
a length of the first time window satisfies at least one of the following:
the length of the first time window is predefined by a protocol, indicated by the network-side device, preconfigured by the network-side device, or configured by the network-side device;
the length of the first time window is related to a time domain pattern of the reference signal; or
the length of the first time window is related to time domain indication information of the reference signal.

Optionally, after the terminal receives the reference signal or the first information transmitted by the network-side device, the method further includes at least one of the following:
(1) until the terminal receives next first information, ceasing to perform, by the terminal, reception of the reference signal, measurement of the reference signal, or synchronization based on the reference signal;
(2) until the terminal receives next first information, performing, by the terminal, reception of the reference signal, measurement of the reference signal, or synchronization based on the reference signal according to a period or position preconfigured or configured by the network-side device or indicated by the first information;
(3) in a case that the reference signal or the first information is related to cell activation, after cell activation or after a third time interval of cell activation, performing, by the terminal, reception of the reference signal, measurement of the reference signal, or synchronization based on the reference signal according to a period or position preconfigured or configured by the network-side device;
   optionally, the third time interval is, for example, Q, where Q is a time gap from a time of receiving a last on-demand SSB; Q is predefined by a protocol/preconfigured by the network side/configured by the network side/indicated by the network side; and Q is 160 ms or determined by the terminal according to capability; or
(4) in a case that the reference signal or the first information is related to cell deactivation, after cell deactivation or after a fourth time interval of cell deactivation, performing, by the terminal, reception of the reference signal, measurement of the reference signal, or synchronization based on the reference signal according to a period or position preconfigured or configured by the network-side device.

Optionally, the first information is indicated according to at least one of the following granularities:
a serving cell; a serving cell group; a reference signal frequency point; a reference signal frequency point group; a physical cell identity PCI; a PCI group; a measurement object; a measurement object group; a beam; or a beam group.

Optionally, the first information is carried by at least one of the following:
downlink control information DCI;
a medium access control control element MAC CE; or
a radio resource control RRC message.

Optionally, the DCI is at least one of the following: UE specific DCI or group common DCI; where
the UE specific DCI satisfies at least one of the following:
relevant information of the first information in the UE specific DCI is configured by the network-side device;
the UE specific DCI includes the relevant information of the first information; or
the UE specific DCI includes a first indication field, configured to indicate the first information; where
the relevant information of the first information includes at least one of the following: whether the UE specific DCI or the terminal supports transmission of an on-demand reference signal; information of a cell or cell group supporting an on-demand reference signal; or on-demand reference signal transmission configuration information;
the group common DCI satisfies at least one of the following:
   a cyclic redundancy check CRC of the group common DCI is scrambled by a radio network temporary identifier identifying the reference signal;
   one block in the group common DCI corresponds to one specific terminal; or
   one block in the group common DCI corresponds to one granularity;
   the group common DCI is configured to indicate at least one of the following: transmission of the reference signal; triggering transmission of the reference signal; cell activation; cell deactivation; synchronization; or measurement;
   the group common DCI includes a second indication field, configured to indicate that the group common DCI includes the first information; and
   a reference signal of a serving cell corresponding to the group common DCI is transmitted in an on-demand transmission mode.

Optionally, in a case that one block in the group common DCI corresponds to one granularity, the block includes at least one of the following:
a third indication field, configured to indicate whether to transmit the reference signal; or
a fourth indication field, configured to indicate the type of the reference signal.

Optionally, the MAC CE is configured for at least one of the following:
activating transmission of the reference signal;
deactivating transmission of the reference signal;
activating a serving cell;
deactivating a serving cell;
activating transmission of a reference signal corresponding to the serving cell;
deactivating transmission of a reference signal corresponding to the serving cell;
activating transmission of an aperiodic tracking reference signal A-TRS; or
deactivating transmission of an A-TRS.

Optionally, secondary cell configuration information or secondary cell addition information in the RRC message serves as the first information; or,
secondary cell configuration information or secondary cell addition information in the RRC message includes the first information.

Optionally, the first information includes at least one of the following:
first indication information, configured to indicate transmission or cancellation of transmission of the reference signal;
second indication information, configured to indicate whether the reference signal is configured for at least one of the following: cell activation, cell deactivation, synchronization, or measurement;
third indication information, configured to indicate whether the reference signal is a cell-defining reference signal or a non cell-defining reference signal;
information of a cell or cell group associated with the reference signal;
information of a measurement object MO, measurement ID, or MO group associated with the reference signal;
information of a frequency point or frequency point group of the reference signal;
information of a PCI or PCI group associated with the reference signal;
quasi co-location QCL information;
transmission configuration indicator TCI information;
a time domain pattern;
fourth indication information, configured to indicate that the reference signal is transmitted in a repetition or beam sweeping manner;
frequency domain information of the reference signal;
a time offset for transmitting or receiving the reference signal; or
a numerology of the reference signal; where
the QCL information or TCI information includes at least one of the following:
   a QCL source; or
   a QCL type; and
   the time domain pattern includes at least one of the following:
      an index of the reference signal;
      a starting position of the reference signal; or
      a length of a receiving time window of the reference signal.

Optionally, in a case that an indication from the network-side device that the terminal is allowed to transmit trigger information is received, the terminal transmits trigger information.

Optionally, the trigger information includes identification information of the network-side device. It may be understood that the identification information of the network-side device herein may be a cell ID, a frequency point corresponding to the cell, a frequency point of an on-demand SSB, or other information usable for identifying the network-side device. The network-side device herein may be a network device indicating that the terminal is allowed to transmit trigger information, or may be another network device.

Hereinafter, the method for transmitting a reference signal and the method for receiving a reference signal provided in the embodiments of the present application are described by using several specific examples.

### Specific Example 1: transmission mode of reference signal or on-demand SSB.

For On-demand SSB, in one possible mode, the network-side device transmits the SSB only when triggered by the terminal; in another possible mode, the network-side device switches from a state of not transmitting SSB to a state of transmitting SSB; and in yet another possible mode, the network-side device changes the transmission period of SSB.

There are two possibilities for transmission position of the on-demand SSB:
one is flexible transmission, where the position is determined according to an indication of the network-side device, or determined in combination with a request of the terminal; and
the other is transmission at a preconfigured occasion/position, that is, the network-side device preconfigures candidate occasion(s)/position(s) for transmitting the on-demand SSB, for example, indicated by a bitmap. Or a direct frame number (Direct Frame Number, DFN)/system frame number (System Frame Number, SFN) index + a symbol index is used to determine a starting occasion/position, and then candidate occasion(s)/position(s) are repeated according to a preconfigured period, which are candidate transmission occasions/positions for the on-demand SSB. When an on-demand SSB is transmitted, it is always transmitted at some occasions/positions on the candidate occasions/positions.

When the network-side device starts transmitting an on-demand SSB, one possibility is to repeatedly transmit the SSB N times according to a fixed SSB period, for example, transmitting the SSB 4 times according to an 80 ms SSB period. Another possibility is to gradually increase the transmission period of the SSB, which achieves power saving effect and keeps the terminal in synchronization state through the SSB as much as possible. For example, when the network-side device starts transmitting the SSB, the network-side device first transmits the SSB twice with a period of 20 ms, at the third or fourth transmission of the SSB, an interval from a previous SSB becomes 40 ms, which is equivalent to switching the SSB period to 40 ms, and then the SSB is transmitted twice again, and according to the same principle, then the SSB period is switched to 80 ms until the SSB is transmitted twice according to a configured maximum SSB period, after which transmission of the SSB is stopped, or the SSB continues to be transmitted according to the maximum SSB period, for example, 640 ms.

### Specific Example 2: A base station triggers on-demand SSB transmission before SCell activation.

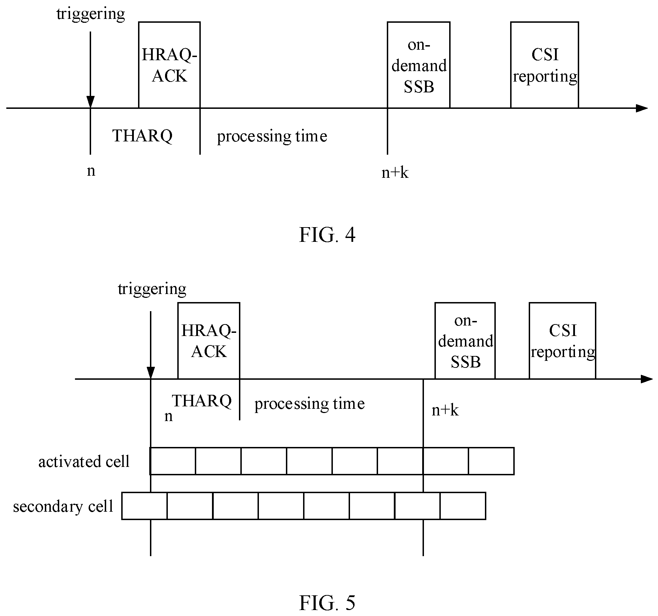

A serving cell, for example, a PCell or an active SCell, transmits an indication to the terminal, indicating that an SCell in an inactive state is to transmit an SSB. The process may be initiated by the serving cell, or initiated by the SCell in the inactive state. If the process is initiated by the SCell in the inactive state, the serving cell is notified through an interface between base stations or the like. FIG. 4 is a schematic diagram of triggering, by a base station, transmission of an on-demand SSB before SCell activation according to embodiments of the present application, as shown in FIG. 4.

Purposes of transmitting the SSB by the SCell may be at least one of the following:
1. triggering the terminal to perform synchronization on the SCell;
2. triggering the terminal to perform measurement on the SCell; or
3. activating the SCell in the inactive state.

Since a plurality of terminals may configure one SCell as their respective SCell, and may activate the same cell as a PCell or an active SCell, when an inactive SCell triggers on-demand transmission through the PCell or active SCell, group common signaling may be transmitted to indicate the plurality of UEs to perform related actions. In addition, the triggered signaling may alternatively be UE specific signaling. The base station may determine whether to trigger through group common signaling or UE specific signaling according to the number of UEs to be indicated, or may always trigger through UE specific/group common signaling.

### Specific Example 3: transmission/reception timing of an on-demand SSB.

How to ensure consistent understanding of the transmission time/reception time of the on-demand SSB between the base station and the UE is crucial for power saving of both the base station and the terminal. Otherwise, the base station may need to transmit additional SSBs, resulting in energy waste, or the terminal may waste energy in receiving at positions where no SSB exists.

Since the SCell may be known or unknown, the following discussion is divided into two cases.

When the SCell is known, the terminal knows both the timing of the active cell transmitting the signaling and the timing of the SCell, and therefore may determine reception timing of the SSB in the following manners.

FIG. 5 is a first schematic diagram of an SSB receiving time according to embodiments of the present application. As shown in FIG. 5, assuming that a time instant when the on-demand SSB trigger/indication signaling is transmitted on the active cell is time instant n, the SCell transmits the SSB on a first slot overlapping with n+k (a starting boundary thereof being located at slot n+k), and the terminal may also receive the SSB on the corresponding slot.

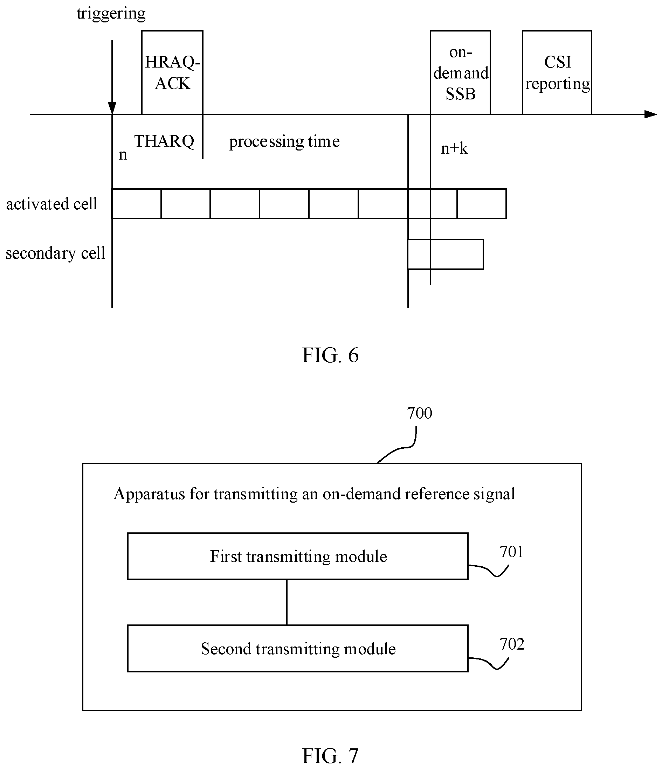

If the SCell is unknown, the terminal may not have acquired the synchronization information of this SCell at this moment, and thus cannot determine slot boundary information on the SCell or the like. In this case, reception can only be performed according to the timing of the active cell. FIG. 6 is a second schematic diagram of reception timing of an SSB according to embodiments of the present application, as shown in FIG. 6.

In this case, the SCell still starts transmitting the SSB on the first slot overlapping with n+k, but the terminal needs to attempt to receive the SSB on the SCell starting from a slot boundary corresponding to n+k, so as to ensure that the terminal does not miss the transmission of the SSB on the SCell.

### Specific Example 4: a base station triggers transmission of on-demand SSB during an SCell dormancy period.

Generally, even in the dormancy state, the SCell periodically transmits the SSB to facilitate measurement performed by the terminal. From the perspective of power saving, before entering dormancy, the base station may indicate an SSB transmission with a different period or different pattern from that in the active state, or indicate the terminal to perform SSB reception according to subsequently received signaling instead of receiving SSBs according to a fixed SSB period.

The SCell indicates a new SSB pattern through group common signaling or UE specific signaling. The signaling may serve as signaling indicating SCell deactivation, or be included in the current deactivation signaling. The new signaling may carry a time indication, for example, a time offset, for indicating when the new SSB pattern/transmission mode takes effect.

### Specific Example 5: a plurality of base stations trigger transmission of on-demand SSB of a same SCell.

Since there may be a plurality of terminals configured with a same SCell, and their PCells or active SCells may be the same, partially the same, or completely different.

When the SCell wants to trigger on-demand SSB transmission, in order to trigger a plurality of terminals to receive the on-demand SSB according to the signaling indication, a problem of selecting a cell for transmitting the trigger signaling may arise. In order to reduce signaling transmission as much as possible, a cell capable of triggering a plurality of terminals to receive the SSB should be selected as much as possible.

If related signaling is transmitted through two or more cells, due to different service loads or scheduling manners of different cells, the transmission time of the signaling related to the on-demand SSB may differ. Therefore, in order to ensure that all terminals can correctly receive the on-demand SSB at appropriate timing, the trigger signaling for the on-demand SSB needs to indicate an offset, so that all terminals can receive the SSB at correct timing. Alternatively, it is necessary to ensure that the signaling transmission timing of a plurality of base stations is sufficient such that after a certain processing interval, no terminal misses the reception of the SSB. However, this approach may lead to high power consumption of the terminal, because some terminals may start attempting to receive the SSB much earlier than needed.

### Specific Example 6

The method for transmitting a reference signal and the corresponding method for receiving a reference signal provided in the embodiments of the present application include the following steps.

Step 1: UE receives a measurement configuration, where the measurement configuration includes at least one measurement identity (meas ID), and each meas ID corresponds to one measurement object MO and one reporting configuration.

According to step 1, the UE is configured with meas ID 1 and meas ID 2.

Step 2: the UE receives x-th indication information (the x-th indication information may be carried in the measurement configuration), and determines that a state of at least one measurement object is an active/deactivated state.

For example, a meas ID list includes meas ID 1 and meas ID 2, where 1 bit in the configuration of meas ID 1 indicates that an MO corresponding thereto is not activated, and 1 bit in meas ID 2 indicates that an MO corresponding thereto is active (according to a conventional solution, if the 1 bit is not present, the corresponding MO is considered to be active by default).

For another example, the network configures a meas ID list according to a manner in the related art, and additionally configures a new meas ID list, where the new meas ID list indicates disabled meas IDs in the meas ID list. An enabled meas ID may be understood as indicating that a corresponding MO is enabled.

For another example, the network configures a meas ID list according to a manner in the related art, and additionally configures an MO list for indicating deactivated MOs. It may be understood that in a case that one MO is associated with a plurality of meas IDs, the network does not need to indicate the plurality of meas IDs one by one.

According to step 2, the UE determines that an MO corresponding to meas ID 1 is inactive, and an MO corresponding to meas ID 2 is active. The UE may start measurement on the MO corresponding to meas ID 2.

Step 3: the UE receives first information, where the first information is configured to activate/deactivate an MO. Taking a MAC CE as an example, the first information may include at least one of the following fields:
an LCID field: configured to indicate that the MAC CE is configured to activate/deactivate an MO;
a meas ID field: configured to indicate an active/deactivated state of the MO associated with a meas ID indicated by the meas ID field; for example, X bits indicate the meas ID; or N bits are used for bit mapping of the meas ID;
an MO field: configured to indicate an active/deactivated state of the MO (in the current measurement framework, the MO also has an ID); or
an A/D field: configured to indicate whether the MO indicated by the preceding meas ID field/MO field is active or deactivated;

According to step 3, the UE activated the MO corresponding to meas ID 1; and the UE may start measurement on the MO corresponding to meas ID 2.

Step 4: the UE reports a measurement result according to reporting configuration of the meas ID.

According to step 4, the UE reports the measurement result of the MO corresponding to meas ID 1.

Step 5: the UE receives an RRC reconfiguration message, where the RRC reconfiguration message adds SCell 1, and a frequency point of the SCell 1 is a frequency point of the MO corresponding to meas ID 1.

Optionally, the on-demand SSB in the above specific examples may alternatively be expressed as the foregoing reference signal.

### Specific Example 7: transmission of an on-demand SSB before configuration of an SCell.

Before a network-side device of a primary cell PCell or another serving cell configures an SCell for a UE, adding an SCell, or deleting an SCell, transmission of an SSB of a target cell may be triggered first through signaling interaction between base stations, and then the UE is indicated to perform measurement on the target cell, and the configuration, addition, or deletion of the SCell is determined according to the measurement result. Specific steps may refer to Example 6.

### Specific Example 8: transmission of on-demand SSB before activation of an SCell

During activation of an SCell, whether the SCell is in a known state for the UE affects whether an SCell fast activation procedure can be applied to the activation process. Whether the SCell is in a known state depends on whether the UE has reported measurement about this cell before receiving activation signaling and whether an SSB of the cell is in a detectable state. Therefore, to enable application of the SCell fast activation procedure to reduce the activation delay, the network-side device or the UE may trigger transmission of an on-demand SSB of a target cell before transmitting the activation signaling, so that the network-side device or the UE may satisfy prerequisite requirements for the SCell fast activation procedure. If triggering is performed by the network side, first information for triggering the on-demand SSB is transmitted before the on-demand SSB is transmitted. A starting transmission time instant of the on-demand SSB of the target cell is predefined by a protocol or indicated by the network side. The starting transmission time instant may be before an SCell activation command, for example, before AA mesCycleSCell, before BB DRX cycles, before CC time, or implemented by the network side. AA, BB, CC may be predefined by a protocol, preconfigured by the network side, or indicated by the network side. If triggering is performed by the UE, the UE may transmit indication information to the PCell or serving cell to trigger transmission of the SSB of the target cell, or directly transmit indication information to the target cell. The UE may perform triggering after measurement reporting of the target cell, after receiving indication information from the network side, or before indicating the PCell or serving cell to activate the target cell. In this case, trigger information may carry identification information (ID or frequency point) of the target cell. In this case, the starting transmission time instant of the on-demand SSB may be as described above as well.

In addition, the on-demand SSB may further serve as a reference signal during the SCell fast activation procedure, that is, to replace an aperiodic TRS (A-TRS). Because the A-TRS is designed for automatic gain control, time-frequency domain synchronization, and other steps during the SCell fast activation procedure, the on-demand SSB may likewise achieve the same functions since the UE no longer needs to blindly search for the SSB. In this case, the transmission time of the on-demand SSB may be the same as the designed transmission time of the A-TRS, that is, a time instant after a certain time processing (activation command processing time and feedback processing time) has elapsed following transmission of the SCell activation command and HARQ-ACK. A time offset value relative to the reference time instant is predefined by a protocol and/or preconfigured by the network side (for example, partially predefined and partially preconfigured by the network side). In this case, transmission of the on-demand SSB may be considered to be (automatically) triggered after the network side receives feedback information of the SCell activation command from the UE, or triggered by the UE for transmission through the feedback information of the SCell activation command.

The network-side device or the UE may likewise trigger transmission of an on-demand SSB of the target cell, and use the on-demand SSB to complete actions such as automatic gain control (AGC) calibration and time-frequency synchronization, so as to complete the SCell activation procedure. Compared with periodically transmitted SSB, an advantage of the on-demand SSB is that the network-side device or the UE can trigger transmission of the SSB at a more appropriate position before and after activation of the SCell procedure, so that the UE can rapidly detect the SSB and complete the above actions without blindly searching for the SSB, thereby greatly reducing delay of the SCell activation process. Furthermore, in a case that the above actions require more than one SSB, triggering a pattern with a shorter period or shorter overall transmission time through the on-demand SSB is also beneficial to reducing delay of the entire SCell activation process. A starting transmission position of the on-demand SSB may be within time L no later than transmission of the SCell activation command or after time L no earlier than transmission of the SCell activation command, where L includes at least one of the processing time of the SCell activation command and the processing time of feedback information of the activation command. The transmission position may be indicated by indication information transmitted by the network side, indicated by trigger information of the UE, predefined by a protocol, or preconfigured by the network side. The transmission position may be indicated by a reference time instant and a time offset value, or only one thereof is indicated while the other is predefined by a protocol or preconfigured by the network side. Possible reference time instants include a transmission time instant of the activation command or a transmission time instant of feedback information of the activation command. The on-demand SSB may be triggered by the network side or by the UE. The timing at which the network side triggers the on-demand SSB may be timing at which, after, or before the network side transmits the signaling for activating the SCell, or timing at which or after the UE feeds back reception of the signaling for activating the SCell, or predefined by a protocol, or implemented by the network side. Triggering the on-demand transmission before or simultaneously with transmission of the activation command enables the UE to rapidly detect the SSB after receiving the activation command, thereby minimizing the delay of the entire process. For example, if triggering is performed simultaneously with transmission of the SCell activation command, the SCell activation command may be considered as or including the trigger information of the on-demand SSB. An appropriate on-demand SSB transmission period or starting transmission position may enable the UE to directly detect the SSB or detect the SSB with minimal delay after successfully decoding the activation command or transmitting feedback information, thereby possibly resulting in lower overall delay compared with other methods. Similarly, timing at which the UE side triggers the on-demand SSB may be timing at which or after the signaling for activating the SCell is received, or timing within a certain processing time after the signaling for activating the SCell is received.

The method for transmitting a reference signal provided in the embodiments of the present application may be performed by an apparatus for transmitting a reference signal. In the embodiments of the present application, an apparatus for transmitting a reference signal performing the method for transmitting a reference signal is taken as an example to illustrate the apparatus for transmitting a reference signal provided in the embodiments of the present application.

FIG. 7 is a schematic structural diagram of an apparatus for transmitting a reference signal according to embodiments of the present application. As shown in FIG. 7, the apparatus 700 for transmitting a reference signal is applied to a network-side device, and the apparatus 700 for transmitting a reference signal includes:
a first transmitting module 701, configured to transmit first information to a terminal; where the first information is configured to indicate transmission of a reference signal by the network-side device; and
a second transmitting module 702, configured to transmit the reference signal to the terminal.

In the embodiments of the present application, the network-side device transmits first information to a terminal, where the first information is configured to indicate or trigger transmission of a reference signal by the network-side device, and then the network-side device transmits the reference signal to the terminal based on the first information, thereby implementing on-demand transmission of the reference signal, which can reduce power consumption of the network-side device and thus achieve network energy saving.

Optionally, the first transmitting module is specifically configured to:
transmit, by a network-side device, first information to a terminal on a first frequency.

The transmitting, by the network-side device, the reference signal to the terminal includes:
transmitting, by the network-side device, the reference signal to the terminal on a second frequency.

Optionally, the first information includes at least one of the following:
first indication information, configured to indicate transmission or cancellation of transmission of the reference signal;
second indication information, configured to indicate whether the reference signal is configured for at least one of the following: cell activation, cell deactivation, synchronization, or measurement;
third indication information, configured to indicate whether the reference signal is a cell-defining reference signal or a non cell-defining reference signal;
information of a cell or cell group associated with the reference signal;
information of a measurement object MO, measurement ID, or MO group associated with the reference signal;
information of a frequency point or frequency point group of the reference signal;
information of a PCI or PCI group associated with the reference signal;
quasi co-location QCL information;
transmission configuration indicator TCI information;
a time domain pattern;
fourth indication information, configured to indicate that the reference signal is transmitted in a repetition or beam sweeping manner;
frequency domain information of the reference signal;
a time offset for transmitting or receiving the reference signal; or
a numerology of the reference signal; where
the QCL information or TCI information includes at least one of the following:
   a QCL source; or
   a QCL type; and
   the time domain pattern includes at least one of the following:
      an index of the reference signal;
      a starting position of the reference signal; or
      a length of a receiving time window of the reference signal.

Optionally, the first information is indicated according to at least one of the following granularities:
a serving cell; a serving cell group; a reference signal frequency point; a reference signal frequency point group; a physical cell identity PCI; a PCI group; a measurement object; a measurement object group; a beam; or a beam group.

Optionally, the first information is carried by at least one of the following:
downlink control information DCI;
a medium access control control element MAC CE; or
a radio resource control RRC message.

Optionally, the DCI is at least one of the following: UE specific DCI or group common DCI; where
the UE specific DCI satisfies at least one of the following:
relevant information of the first information in the UE specific DCI is configured by the network-side device; or
the UE specific DCI includes the relevant information of the first information;
the UE specific DCI includes a first indication field, configured to indicate the first information; where
the relevant information of the first information includes at least one of the following: whether the UE specific DCI or the terminal supports transmission of an on-demand reference signal; information of a cell or cell group supporting an on-demand reference signal; or on-demand reference signal transmission configuration information;
the group common DCI satisfies at least one of the following:
   a cyclic redundancy check CRC of the group common DCI is scrambled by a radio network temporary identifier identifying the reference signal;
   one block in the group common DCI corresponds to one specific terminal; or
   one block in the group common DCI corresponds to one granularity;
   the group common DCI is configured to indicate at least one of the following: transmission of the reference signal; triggering transmission of the reference signal; cell activation; cell deactivation; synchronization; or measurement;
   the group common DCI includes: a second indication field, configured to indicate that the group common DCI includes the first information; and
   a reference signal of a serving cell corresponding to the group common DCI is transmitted in an on-demand transmission mode.

Optionally, in a case that one block in the group common DCI corresponds to one granularity, the block includes at least one of the following:
a third indication field, configured to indicate whether to transmit the reference signal; or
a fourth indication field, configured to indicate the type of the reference signal.

Optionally, the MAC CE is configured for at least one of the following:
activating transmission of the reference signal;
deactivating transmission of the reference signal;
activating a serving cell;
deactivating a serving cell;
activating transmission of a reference signal corresponding to the serving cell;
deactivating transmission of a reference signal corresponding to the serving cell;
activating transmission of an aperiodic tracking reference signal A-TRS; or
deactivating transmission of the A-TRS.

Optionally, secondary cell configuration information or secondary cell addition information in the RRC message serves as the first information; or,
secondary cell configuration information or secondary cell addition information in the RRC message includes the first information.

Optionally, the first transmitting module 701 is specifically configured to:
when a first condition is satisfied, transmit the reference signal to the terminal, where the first condition includes at least one of the following:
the network-side device activates a secondary cell corresponding to a second frequency;
the network-side device indicates deactivation of a secondary cell corresponding to a second frequency;
a first time interval since the network-side device transmitted a previous reference signal is greater than or equal to a first threshold;
a timer related to transmission of the reference signal expires;
the network-side device switches from a sleep state to an active state;
the network-side device detects that a terminal has lost synchronization; or
the network-side device triggers the terminal to report measurement information.

Optionally, the apparatus further includes:
a processing module, configured to monitor feedback information of the terminal on the first frequency, where the feedback information is configured to indicate whether the terminal correctly receives the first information.

Optionally, the processing module is further configured to:
in a case that the received feedback information is an acknowledgment ACK, determine that the terminal correctly receives the first information;
in a case that the received feedback information is a negative acknowledgment NACK, determine that the terminal does not correctly receive the first information;
in a case that ACK feedback information is not received, determine that the terminal does not correctly receive the first information; and
in a case that NACK feedback information is not received, determine that the terminal correctly receives the first information.

Optionally, a resource position for reporting the feedback information is indicated by DCI or preconfigured by the network-side device; where
a second time interval between the resource position and the first information is less than or equal to a second threshold, or the second time interval is indicated by DCI, preconfigured by the network-side device, or predefined by a protocol.

Optionally, the first transmitting module 701 is specifically configured to:
transmit the reference signal to the terminal on a second frequency starting from a P-th first time unit thereon that overlaps or partially overlaps with a first time instant; or,
transmit the reference signal to the terminal on the second frequency no earlier than the first time instant.

Optionally, the first time instant is a time instant of a primary cell or an active cell corresponding to a first frequency; and
a starting boundary of the P-th first time unit overlaps or partially overlaps with the first time instant.

Optionally, the first time instant is slot n+k; where
n is a transmission time of the first information, or a transmission time instant or reception time instant of feedback information of the terminal; and
k includes at least one of the following:
   a processing time of feedback information on the first frequency;
   a second processing time;
   a time offset configured by RRC; or
   a time offset indicated by the first information; where
   the second processing time is predefined by a protocol or reported by the terminal.

Optionally, taking effect of information indicated by the first information satisfies at least one of the following:
taking effect immediately in the current period;
taking effect starting after a second time unit;
taking effect starting at the transmission time instant of the first reference signal in a next period; or
taking effect in the X-th period after the current period; where X is an integer greater than 0.

Optionally, in a case that the first information is configured to indicate transmission of an A-TRS, the first information is configured to activate transmission of the reference signal implicitly, or activate transmission of the reference signal explicitly; or,
in a case that the first information is configured to indicate transmission of the reference signal, the first information is configured to activate transmission of an A-TRS of a serving cell corresponding to the reference signal implicitly, or activate transmission of an A-TRS of a serving cell corresponding to the reference signal explicitly; where
the first information includes indication information of the A-TRS; and
a transmission time of the reference signal is before or after a transmission time of the A-TRS.

Optionally, the first transmitting module 701 is specifically configured to:
in a case that a second condition is satisfied, transmit the reference signal to the terminal on a first frequency or a second frequency according to a default reference signal pattern or a conventional reference signal pattern; where
the second condition includes at least one of the following:
   an activation procedure of a serving cell corresponding to the second frequency is completed;
   a first preset duration has elapsed since activation of a serving cell corresponding to the second frequency;
   a second preset duration has elapsed since the network-side device transmitted the first information; or
   a third preset duration has elapsed since the network-side device transmitted the reference signal.

Optionally, the second transmitting module 702 is specifically configured to transmit the reference signal to the terminal after receiving trigger information from the terminal;
Optionally, the trigger information from the terminal includes identification information of the network-side device.

Optionally, the apparatus further includes:
a third transmitting module, configured to indicate that the terminal is allowed to transmit trigger information.

The apparatus for transmitting a reference signal in the embodiments of the present application may be an electronic device, such as an electronic device with an operating system, or a component in an electronic device, such as an integrated circuit or a chip. The electronic device may be a network-side device, or may be a device other than the network-side device. By way of example, the network-side device may include, but is not limited to, the types of the network-side device 12 listed above, and the other device may be a server, a network attached storage (Network Attached Storage, NAS), or the like. This is not specifically limited in the embodiments of the present application.

The apparatus for transmitting a reference signal provided in the embodiments of the present application can implement the processes implemented by the method embodiment shown in FIG. 2, with the same technical effects achieved. To avoid repetition, details are not repeated herein.

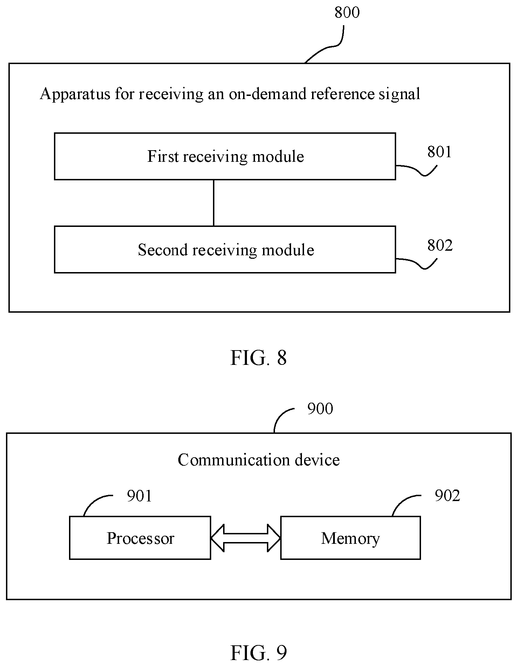

FIG. 8 is a schematic structural diagram of an apparatus for receiving a reference signal according to embodiments of the present application. As shown in FIG. 8, the apparatus 800 for receiving a reference signal is applied to a terminal, and the apparatus 800 for receiving a reference signal includes:
a receiving module 801, configured to receive first information transmitted by a network-side device; where the first information is configured to indicate transmission of a reference signal by the network-side device; and
a determining module 802, configured to determine, according to the first information, whether to receive the reference signal transmitted by the network-side device.

Optionally, the receiving module 801 is specifically configured to:
receive the first information transmitted by the network-side device on a first frequency.

Optionally, the receiving module 801 is further configured to:
in a case that the terminal determines to receive the reference signal transmitted by the network-side device, receive the reference signal transmitted by the network-side device.

Optionally, the receiving module 801 is specifically configured to:
receive the reference signal transmitted by the network-side device on a first frequency or a second frequency.

Optionally, the apparatus further includes:
a processing module, configured to perform a target operation based on the reference signal, where the target operation includes at least one of the following: synchronization, measurement, reporting.

Optionally, the apparatus further includes:
a transmitting module, configured to transmit feedback information on a resource corresponding to the first frequency; where the feedback information is configured to indicate whether the terminal correctly receives the first information;
in a case that the terminal correctly receives the first information on the first frequency, the feedback information is ACK; and
in a case that the terminal does not correctly receive the first information on the first frequency, the feedback information is NACK.

Optionally, the receiving module 801 is specifically configured to perform at least one of the following:
detecting the reference signal starting from a starting boundary or ending boundary corresponding to a first time instant;
detecting the reference signal starting from a second time instant;
detecting the reference signal starting from a position offset by T time units from a third time instant or a fourth time instant on the first frequency; where T is predefined by a protocol, indicated by the network-side device, preconfigured by the network-side device, or configured by the network-side device; or
receiving the reference signal on the second frequency within a first time window.

Optionally, the receiving module 801 is specifically configured to:
in a case that a cell corresponding to a second frequency is an unknown cell, and that the terminal receives the first information at a third time instant on a first frequency, detect the reference signal starting from a starting boundary or ending boundary corresponding to the first time instant; and
in a case that a cell corresponding to the second frequency is a known cell, and that the terminal receives the first information at a fourth time instant on the first frequency, detect the reference signal starting from the second time instant.

Optionally, the fourth time instant is slot n1; and
the second time instant is slot n1+k1; where
the slot n1 is a time instant of a cell on the second frequency corresponding to the terminal receiving the first information or transmitting feedback information;
the slot n1+k1 is a time instant of the cell corresponding to the second frequency; and
k1 includes at least one of the following:
   processing time for the feedback information; or
   third processing time; where
   the third processing time is predefined by a protocol.

Optionally, a starting position of the first time window is determined based on at least one of the following:
the first time instant;
the second time instant; or
a position offset by T time units from the third time instant or the fourth time instant; where
a length of the first time window satisfies at least one of the following:
   the length of the first time window is predefined by a protocol, indicated by the network-side device, preconfigured by the network-side device, or configured by the network-side device;
   the length of the first time window is related to a time domain pattern of the reference signal; or
   the length of the first time window is related to time domain indication information of the reference signal.

Optionally, the processing module is further configured to perform at least one of the following:
until the terminal receives next first information, ceasing to perform reception of the reference signal, measurement of the reference signal, or synchronization based on the reference signal;
until the terminal receives next first information, performing reception of the reference signal, measurement of the reference signal, or synchronization based on the reference signal according to a period or position preconfigured or configured by the network-side device or indicated by the first information;
in a case that the reference signal or the first information is related to cell activation, after cell activation or after a third time interval of cell activation, performing reception of the reference signal, measurement of the reference signal, or synchronization based on the reference signal according to a period or position preconfigured or configured by the network-side device; or
in a case that the reference signal or the first information is related to cell deactivation, after cell deactivation or after a fourth time interval of cell deactivation, performing reception of the reference signal, measurement of the reference signal, or synchronization based on the reference signal according to a period or position preconfigured or configured by the network-side device.

Optionally, the first information is indicated according to at least one of the following granularities:
a serving cell; a serving cell group; a reference signal frequency point; a reference signal frequency point group; a physical cell identity PCI; a PCI group; a measurement object; or a measurement object group.

Optionally, the first information is carried by at least one of the following:
downlink control information DCI;
a medium access control control element MAC CE; or
a radio resource control RRC message.

Optionally, the DCI is at least one of the following: UE specific DCI or group common DCI; where
the UE specific DCI satisfies at least one of the following:
relevant information of the first information in the UE specific DCI is configured by the network-side device;
the UE specific DCI includes the relevant information of the first information; or
the UE specific DCI includes a first indication field, configured to indicate the first information; where
the relevant information of the first information includes at least one of the following: whether the UE specific DCI or the terminal supports transmission of an on-demand reference signal; information of a cell or cell group supporting an on-demand reference signal; or on-demand reference signal transmission configuration information;
the group common DCI satisfies at least one of the following:
   a cyclic redundancy check CRC of the group common DCI is scrambled by a radio network temporary identifier identifying the reference signal;
   one block in the group common DCI corresponds to one specific terminal; or
   one block in the group common DCI corresponds to one granularity;
   the group common DCI is configured to indicate at least one of the following: transmission of the reference signal; triggering transmission of the reference signal; cell activation; cell deactivation; synchronization; or measurement;
   the group common DCI includes: a second indication field, configured to indicate that the group common DCI includes the first information; and
   a reference signal of a serving cell corresponding to the group common DCI is transmitted in an on-demand transmission mode.

Optionally, in a case that one block in the group common DCI corresponds to one granularity, the block includes at least one of the following:
a third indication field, configured to indicate whether to transmit the reference signal; or
a fourth indication field, configured to indicate the type of the reference signal.

Optionally, the MAC CE is configured for at least one of the following:
activating transmission of the reference signal;
deactivating transmission of the reference signal;
activating a serving cell;
deactivating a serving cell;
activating transmission of a reference signal corresponding to the serving cell;
deactivating transmission of a reference signal corresponding to the serving cell;
activating transmission of an aperiodic tracking reference signal A-TRS; or
deactivating transmission of the A-TRS.

Optionally, secondary cell configuration information or secondary cell addition information in the RRC message serves as the first information; or,
secondary cell configuration information or secondary cell addition information in the RRC message includes the first information.

Optionally, the first information includes at least one of the following:
first indication information, configured to indicate transmission or cancellation of transmission of the reference signal;
second indication information, configured to indicate whether the reference signal is configured for at least one of the following: cell activation, cell deactivation, synchronization, or measurement;
third indication information, configured to indicate whether the reference signal is a cell-defining reference signal or a non cell-defining reference signal;
information of a cell or cell group associated with the reference signal;
information of a measurement object MO, measurement ID, or MO group associated with the reference signal;
information of a frequency point or frequency point group of the reference signal;
information of a PCI or PCI group associated with the reference signal;
quasi co-location QCL information;
transmission configuration indicator TCI information;
a time domain pattern;
fourth indication information, configured to indicate that the reference signal is transmitted in a repetition or beam sweeping manner;
frequency domain information of the reference signal;
a time offset for transmitting or receiving the reference signal; or
a numerology of the reference signal; where
the QCL information or TCI information includes at least one of the following:
   a QCL source; or
   a QCL type; and
   the time domain pattern includes at least one of the following:
      an index of the reference signal;
      a starting position of the reference signal; or
      a length of a receiving time window of the reference signal.

Optionally, the apparatus further includes:
a transmitting module, configured to transmit trigger information in a case that an indication from the network-side device that the terminal is allowed to transmit trigger information is received.

Optionally, the trigger information includes identification information of the network-side device.

In the embodiments of the present application, the terminal receives first information transmitted by a network-side device; where the first information is configured to indicate transmission of a reference signal by the network-side device; and the terminal determines whether to receive the reference signal transmitted by the network-side device, thereby implementing on-demand transmission of the reference signal, which can reduce power consumption of the network-side device and thus achieve network energy saving.

The apparatus for receiving a reference signal in the embodiments of the present application may be an electronic device, such as an electronic device with an operating system, or a component in an electronic device, such as an integrated circuit or a chip. The electronic device may be a terminal, or may be a device other than the terminal. By way of example, the terminal may include, but is not limited to, the types of the terminal 11 listed above, and the other device may be a server, a network attached storage (Network Attached Storage, NAS), or the like. This is not specifically limited in the embodiments of the present application.

The apparatus for receiving a reference signal provided in the embodiments of the present application can implement the processes implemented by the method embodiment shown in FIG. 3, with the same technical effects achieved. To avoid repetition, details are not described herein again.

Embodiments of the present application further provide a communication device. FIG. 9 is a schematic structural diagram of a communication device according to embodiments of the present application. As shown in FIG. 9, the communication device 900 includes a processor 901 and a memory 902. A program or an instruction executable on the processor 901 is stored on the memory 902. For example, when the communication device 900 is a terminal, the program or instruction, when executed by the processor 901, implements the steps of the method embodiment shown in FIG. 3 above, with the same technical effects achieved. When the communication device 900 is a network-side device, the program or instructions, when executed by the processor 901, implement the steps of the method embodiments shown in FIG. 2 above, with the same technical effects achieved. To avoid repetition, details are not repeated herein.

Embodiments of the present application further provide a terminal, including a processor and a communication interface. The communication interface is coupled to the processor, and the processor is configured to run a program or an instruction to implement the steps in the method embodiment shown in FIG. 3. The terminal embodiment corresponds to the above terminal-side method embodiment, and the implementation processes and implementations of the above method embodiment can all be applied to the terminal embodiment, with the same technical effects achieved.

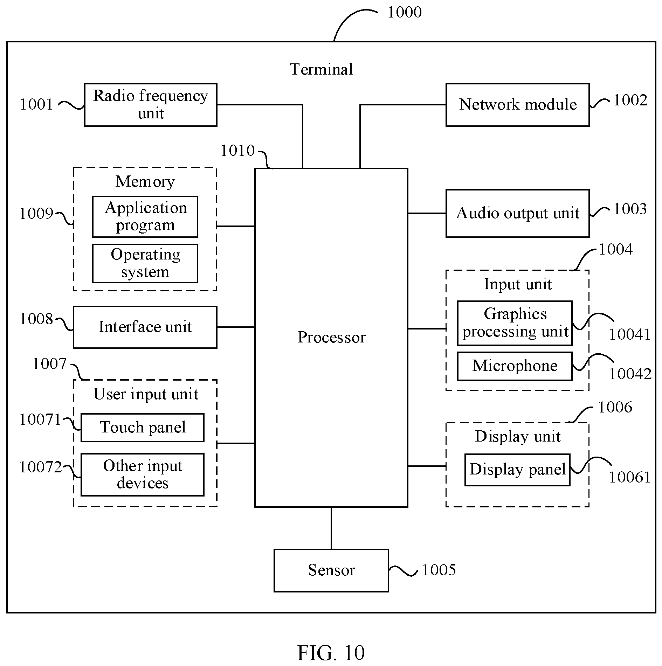

Embodiments of the present application further provide a terminal. FIG. 10 is a schematic diagram of a hardware structure of a terminal according to embodiments of the present application. As shown in FIG. 10, the terminal 1000 includes, but is not limited to, at least some of the components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

Those skilled in the art may understand that the terminal 1000 may also include a power supply (such as a battery) for supplying power to various components. The power supply may be logically connected to the processor 1010 through a power management system, thereby implementing functions such as charging, discharging, and power consumption management through the power management system. The structure of the terminal shown in FIG. 10 does not constitute any limitation on the terminal. The terminal may include more or fewer components than illustrated, or combine certain components, or have different component arrangements. Details are not described herein.

It should be understood that, in the embodiments of the present application, the input unit 1004 may include a graphics processing unit (Graphics Processing Unit, GPU) 10041 and a microphone 10042. The graphics processing unit 10041 is configured to process image data of still pictures or videos obtained by an image capture device (such as a camera) in a video capture mode or an image capture mode. The display unit 1006 may include a display panel 10061, and the display panel 10061 may be configured in the form of a liquid crystal display, an organic light-emitting diode, or the like. The user input unit 1007 includes at least one of a touch panel 10071 and other input devices 10072. The touch panel 10071 is also referred to as a touch screen. The touch panel 10071 may include two parts: a touch detection device and a touch controller. The other input devices 10072 may include, but are not limited to, a physical keyboard, function keys (such as volume control keys, switch keys, etc.), a trackball, a mouse, and a joystick. Details are not described herein.

In the embodiments of the present application, after receiving downlink data from a network-side device, the radio frequency unit 1001 may transmit the downlink data to the processor 1010 for processing; in addition, the radio frequency unit 1001 may transmit uplink data to the network-side device. Generally, the radio frequency unit 1001 includes, but is not limited to, an antenna, an amplifier, a transceiver, a coupler, a low noise amplifier, and a duplexer.

The memory 1009 may be configured to store a software program or instruction and various data. The memory 1009 may mainly include a first storage area storing a program or an instruction and a second storage area for storing data, where the first storage area may store an operating system, an application program, or an instruction required for at least one function (such as a sound playback function or an image playback function). In addition, the memory 1009 may include volatile memory or non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1009 in the embodiments of the present application includes, but is not limited to, these and any other suitable types of memories.

The processor 1010 may include one or more processing units. Optionally, the processor 1010 integrates an application processor and a modem processor. The application processor mainly processes operations related to an operating system, a user interface, an application program, or the like. The modem processor mainly processes wireless communication signals, such as a baseband processor. It may be understood that the foregoing modem processor may not be integrated into the processor 1010.

The radio frequency unit 1001 is configured to receive first information transmitted by a network-side device; where the first information is configured to indicate transmission of a reference signal by the network-side device.

The processor 1010 is configured to determine, according to the first information, whether to receive the reference signal transmitted by the network-side device.

Optionally, the radio frequency unit 1001 is specifically configured to receive the first information transmitted by the network-side device on a first frequency.

Optionally, the radio frequency unit 1001 is further configured to:
in a case that the terminal determines to receive the reference signal transmitted by the network-side device, receive the reference signal transmitted by the network-side device.

Optionally, the radio frequency unit 1001 is specifically configured to:
receive the reference signal transmitted by the network-side device on a first frequency or a second frequency.

Optionally, the processor 1010 is further configured to perform a target operation based on the reference signal, where the target operation includes at least one of the following: synchronization, measurement, or reporting.

Optionally, the radio frequency unit 1001 is further configured to transmit feedback information on a resource corresponding to the first frequency; where the feedback information is configured to indicate whether the terminal correctly receives the first information;
in a case that the terminal correctly receives the first information on the first frequency, the feedback information is ACK; and
in a case that the terminal does not correctly receive the first information on the first frequency, the feedback information is NACK.

Optionally, the radio frequency unit 1001 is specifically configured to perform at least one of the following:
detecting the reference signal starting from a starting boundary or ending boundary corresponding to a first time instant;
detecting the reference signal starting from a second time instant;
detecting the reference signal starting from a position offset by T time units from a third time instant or a fourth time instant on the first frequency; where T is predefined by a protocol, indicated by the network-side device, preconfigured by the network-side device, or configured by the network-side device; or
receiving the reference signal on the second frequency within a first time window.

Optionally, the radio frequency unit 1001 is specifically configured to:
in a case that a cell corresponding to a second frequency is an unknown cell, and that the terminal receives the first information at a third time instant on a first frequency, detect the reference signal starting from a starting boundary or ending boundary corresponding to the first time instant; and
in a case that a cell corresponding to the second frequency is a known cell, and that the terminal receives the first information at a fourth time instant on the first frequency, detect the reference signal starting from the second time instant.

Optionally, the fourth time instant is slot n1; and
the second time instant is slot n1+k1; where
the slot n1 is a time instant of a cell on the second frequency corresponding to the terminal receiving the first information or transmitting feedback information;
the slot n1+k1 is a time instant of the cell corresponding to the second frequency; and
k1 includes at least one of the following:
   processing time for the feedback information; or
   third processing time; where
   the third processing time is predefined by a protocol.

Optionally, a starting position of the first time window is determined based on at least one of the following:
the first time instant;
the second time instant; or
a position offset by T time units from the third time instant or the fourth time instant; where
a length of the first time window satisfies at least one of the following:
   the length of the first time window is predefined by a protocol, indicated by the network-side device, preconfigured by the network-side device, or configured by the network-side device;
   the length of the first time window is related to a time domain pattern of the reference signal; or
   the length of the first time window is related to time domain indication information of the reference signal.

Optionally, the processor 1010 is further configured to perform at least one of the following:
until the terminal receives next first information, ceasing to perform reception of the reference signal, measurement of the reference signal, or synchronization based on the reference signal;
until the terminal receives next first information, performing reception of the reference signal, measurement of the reference signal, or synchronization based on the reference signal according to a period or position preconfigured or configured by the network-side device or indicated by the first information;
in a case that the reference signal or the first information is related to cell activation, after cell activation or after a third time interval of cell activation, performing reception of the reference signal, measurement of the reference signal, or synchronization based on the reference signal according to a period or position preconfigured or configured by the network-side device; or
in a case that the reference signal or the first information is related to cell deactivation, after cell deactivation or after a fourth time interval of cell deactivation, performing reception of the reference signal, measurement of the reference signal, or synchronization based on the reference signal according to a period or position preconfigured or configured by the network-side device.

Optionally, the first information is indicated according to at least one of the following granularities:
a serving cell; a serving cell group; a reference signal frequency point; a reference signal frequency point group; a physical cell identity PCI; a PCI group; a measurement object; a measurement object group; a beam; or a beam group.

Optionally, the first information is carried by at least one of the following:
downlink control information DCI;
a medium access control control element MAC CE; or
a radio resource control RRC message.

Optionally, the DCI is at least one of the following: UE specific DCI or group common DCI; where
the UE specific DCI satisfies at least one of the following:
relevant information of the first information in the UE specific DCI is configured by the network-side device;
the UE specific DCI includes the relevant information of the first information; or
the UE specific DCI includes a first indication field, configured to indicate the first information; where
the relevant information of the first information includes at least one of the following: whether the UE specific DCI or the terminal supports transmission of an on-demand reference signal; information of a cell or cell group supporting an on-demand reference signal; or on-demand reference signal transmission configuration information;
the group common DCI satisfies at least one of the following:
   a cyclic redundancy check CRC of the group common DCI is scrambled by a radio network temporary identifier identifying the reference signal;
   one block in the group common DCI corresponds to one specific terminal; or
   one block in the group common DCI corresponds to one granularity;
   the group common DCI is configured to indicate at least one of the following: transmission of the reference signal; triggering transmission of the reference signal; cell activation; cell deactivation; synchronization; or measurement;
   the group common DCI includes: a second indication field, configured to indicate that the group common DCI includes the first information; and
   a reference signal of a serving cell corresponding to the group common DCI is transmitted in an on-demand transmission mode.

Optionally, in a case that one block in the group common DCI corresponds to one granularity, the block includes at least one of the following:
a third indication field, configured to indicate whether to transmit the reference signal; or
a fourth indication field, configured to indicate the type of the reference signal.

Optionally, the MAC CE is configured for at least one of the following:
activating transmission of the reference signal;
deactivating transmission of the reference signal;
activating a serving cell;
deactivating a serving cell;
activating transmission of a reference signal corresponding to the serving cell;
deactivating transmission of a reference signal corresponding to the serving cell;
activating transmission of an aperiodic tracking reference signal A-TRS; or
deactivating transmission of the A-TRS.

Optionally, secondary cell configuration information or secondary cell addition information in the RRC message serves as the first information; or,
secondary cell configuration information or secondary cell addition information in the RRC message includes the first information.

Optionally, the first information includes at least one of the following:
first indication information, configured to indicate transmission or cancellation of transmission of the reference signal;
second indication information, configured to indicate whether the reference signal is configured for at least one of the following: cell activation, cell deactivation, synchronization, or measurement;
third indication information, configured to indicate whether the reference signal is a cell-defining reference signal or a non cell-defining reference signal;
information of a cell or cell group associated with the reference signal;
information of a measurement object MO, measurement ID, or MO group associated with the reference signal;
information of a frequency point or frequency point group of the reference signal;
information of a PCI or PCI group associated with the reference signal;
quasi co-location QCL information;
transmission configuration indicator TCI information;
a time domain pattern;
fourth indication information, configured to indicate that the reference signal is transmitted in a repetition or beam sweeping manner;
frequency domain information of the reference signal;
a time offset for transmitting or receiving the reference signal; or
a numerology of the reference signal; where
the QCL information or TCI information includes at least one of the following:
   a QCL source; or
   a QCL type; and
   the time domain pattern includes at least one of the following:
      an index of the reference signal;
      a starting position of the reference signal; or
      a length of a receiving time window of the reference signal.

It may be understood that for the implementation processes of the implementations mentioned in the embodiments, reference may be made to the relevant descriptions of the method embodiment shown in FIG. 3, with the same or corresponding technical effects achieved. To avoid repetition, details are not repeated herein.

Embodiments of the present application further provide a network-side device, including a processor and a communication interface. The communication interface is coupled to the processor, and the processor is configured to run a program or an instruction to implement the steps of the method embodiment shown in FIG. 2. The network-side device embodiment corresponds to the above network-side device method embodiment, and the implementation processes and implementations of the above method embodiments may all be applied to the network-side device embodiment, with the same technical effects achieved.

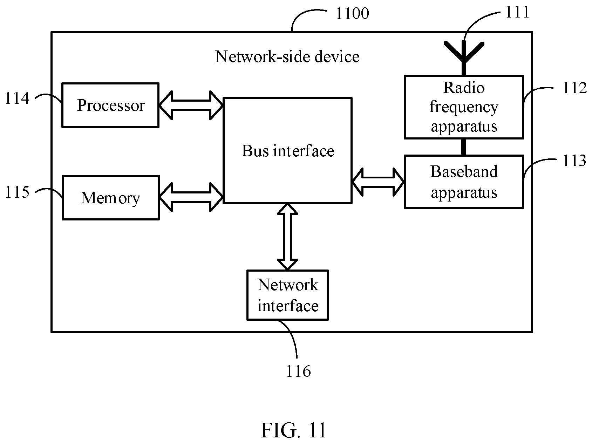

Embodiments of the present application further provide a network-side device. FIG. 11 is a schematic diagram of a hardware structure of a network-side device according to embodiments of the present application. As shown in FIG. 11, the network-side device 1100 includes an antenna 111, a radio frequency apparatus 112, a baseband apparatus 113, a processor 114, and a memory 115. The antenna 111 is connected to the radio frequency apparatus 112. In an uplink direction, the radio frequency apparatus 112 receives information via the antenna 111 and transmits the received information to the baseband apparatus 113 for processing. In a downlink direction, the baseband apparatus 113 processes information that needs to be transmitted and transmits processed information to the radio frequency apparatus 112, and the radio frequency apparatus 112 processes the received information and transmits processed information out via the antenna 111.

The method executed by the network-side device in the above embodiments may be implemented in the baseband apparatus 113, and the baseband apparatus 113 includes a baseband processor.

The baseband apparatus 113 may include, for example, at least one baseband board, and a plurality of chips are disposed on the baseband board. As shown in FIG. 11, one chip is, for example, a baseband processor, which is connected to the memory 115 through a bus interface to invoke a program in the memory 115 and perform the network device operations shown in the above method embodiments.

The network-side device may further include a network interface 116, such as a common public radio interface (Common Public Radio Interface, CPRI).

Specifically, the network-side device 1100 in the embodiments of the present application further includes an instruction or a program stored on the memory 115 and executable on the processor 114. The processor 114 invokes the instruction or program in the memory 115 to perform the steps of the method embodiment shown in FIG. 2, with the same technical effects achieved. To avoid repetition, details are not repeated herein.

Embodiments of the present application further provide a readable storage medium, on which a program or an instruction is stored. When the program or instruction is executed by a processor, the processes of the above method embodiments are implemented, with the same technical effects achieved. To avoid repetition, details are not repeated herein.

The processor is the processor in the terminal described in the above embodiments. The readable storage medium includes a computer-readable storage medium, such as a computer read-only memory ROM, a random access memory RAM, a magnetic disk or an optical disk. In some embodiments, the readable storage medium may be a non-transitory readable storage medium.

Embodiments of the present application further provide a chip, where the chip includes a processor and a communication interface, the communication interface is coupled to the processor, and the processor is configured to run a program or an instruction to implement the processes of the above method embodiments, with the same technical effects achieved. To avoid repetition, details are not repeated herein.

It should be understood that the chip mentioned in the embodiments of the present application may alternatively be referred to as a system-level chip, a system chip, a chip system, or a system-on-chip, etc.

Embodiments of the present application further provide a computer program/program product, where the computer program/program product is stored in a storage medium, and the computer program/program product is executed by at least one processor to implement the processes of the above method embodiments, with the same technical effects achieved. To avoid repetition, details are not repeated herein.

Embodiments of the present application further provide a wireless communication system including a terminal and a network-side device, where the terminal is configured to perform the steps of the method embodiments shown in FIG. 2, and the network-side device is configured to perform the steps of the method embodiments shown in FIG. 3.

It should be noted that, in this specification, the terms "include", "comprise" or any other variants thereof are intended to cover non-exclusive inclusion, so that a process, method, article, or apparatus including a series of elements not only includes those elements, but also includes other elements not explicitly listed, or also includes elements inherent to such process, method, article, or apparatus. Without more restrictions, an element defined by the statement "including one ..." does not exclude the existence of another identical element in the process, method, article or apparatus including the element. In addition, it should be noted that the scope of the method and apparatus in the implementations of the present application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Through the description of the above embodiments, those skilled in the art can clearly understand that the above embodiment methods may be implemented by means of a computer software product plus a necessary universal hardware platform, or by hardware. The computer software product is stored in a storage medium (for example, a ROM, a RAM, a magnetic disk, or an optical disk), including several instructions to make a terminal or network-side device execute the methods described in the embodiments of the present application.

The embodiments of the present application have been described above with reference to the accompanying drawings, but the present application is not limited to the above specific implementations. The above specific implementations are merely illustrative and not restrictive. Under the enlightenment of the present application, those of ordinary skill in the art can make many forms of implementations without departing from the purpose of the present application and the scope protected by the claims, and these implementations all fall within the protection of the present application.

## Claims

1. A method for transmitting a reference signal, comprising:
transmitting, by a network-side device, first information to a terminal; wherein the first information is configured to indicate transmission of a reference signal by the network-side device; and
transmitting, by the network-side device, the reference signal to the terminal.

2. The method according to claim 1, wherein the transmitting, by a network-side device, first information to a terminal comprises:
transmitting, by the network-side device, first information to a terminal on a first frequency; and
the transmitting, by the network-side device, the reference signal to the terminal comprises:
transmitting, by the network-side device, the reference signal to the terminal on a second frequency.

3. The method according to claim 1, wherein the transmitting, by a network-side device, first information to a terminal comprises:
transmitting, by the network-side device, first information to a terminal on a first frequency; and
the transmitting, by the network-side device, the reference signal to the terminal comprises:
transmitting, by the network-side device, the reference signal to the terminal on the first frequency.

4. The method according to any one of claims 1 to 3, wherein the first information is indicated according to at least one of the following granularities:
a serving cell; a serving cell group; a reference signal frequency point; a reference signal frequency point group; a physical cell identity PCI; a PCI group; a measurement object; a measurement object group; a beam; or a beam group.

5. The method according to any one of claims 1 to 4, wherein
the first information is carried by at least one of the following:
downlink control information DCI;
a medium access control control element MAC CE; or
a radio resource control RRC message.

6. The method according to claim 5, wherein
the DCI is at least one of the following: UE specific DCI or group common DCI; wherein
the UE specific DCI satisfies at least one of the following:
relevant information of the first information in the UE specific DCI is configured by the network-side device;
the UE specific DCI comprises relevant information of the first information; or
the UE specific DCI comprises a first indication field, configured to indicate the first information; wherein
the relevant information of the first information comprises at least one of the following: whether the UE specific DCI or the terminal supports transmission of an on-demand reference signal; information of a cell or cell group supporting an on-demand reference signal; or on-demand reference signal transmission configuration information;
the group common DCI satisfies at least one of the following:
a cyclic redundancy check CRC of the group common DCI is scrambled by a radio network temporary identifier identifying the reference signal;
one block in the group common DCI corresponds to one specific terminal; or
one block in the group common DCI corresponds to one granularity;
the group common DCI is configured to indicate at least one of the following: transmission of the reference signal; triggering transmission of the reference signal; cell activation; cell deactivation; synchronization; or measurement;
the group common DCI comprises a second indication field, configured to indicate that the group common DCI comprises the first information; and
a reference signal of a serving cell corresponding to the group common DCI is transmitted in an on-demand transmission mode.

7. The method according to claim 6, wherein
in a case that one block in the group common DCI corresponds to one granularity, the block comprises at least one of the following:
a third indication field, configured to indicate whether to transmit the reference signal; or
a fourth indication field, configured to indicate a type of the reference signal.

8. The method according to claim 5, wherein
the MAC CE is configured for at least one of the following:
activating transmission of the reference signal;
deactivating transmission of the reference signal;
activating a serving cell;
deactivating a serving cell;
activating transmission of a reference signal corresponding to the serving cell;
deactivating transmission of a reference signal corresponding to the serving cell;
activating transmission of an aperiodic tracking reference signal A-TRS; or
deactivating transmission of the A-TRS.

9. The method according to claim 5, wherein
secondary cell configuration information or secondary cell addition information in the RRC message serves as the first information; or,
secondary cell configuration information or secondary cell addition information in the RRC message comprises the first information.

10. The method according to any one of claims 1 to 9, wherein
the first information comprises at least one of the following:
first indication information, configured to indicate transmission or cancellation of transmission of the reference signal;
second indication information, configured to indicate whether the reference signal is configured for at least one of the following: cell activation, cell deactivation, synchronization, or measurement;
third indication information, configured to indicate whether the reference signal is a cell-defining reference signal or a non cell-defining reference signal;
information of a cell or cell group associated with the reference signal;
information of a measurement object MO, measurement ID, or MO group associated with the reference signal;
information of a frequency point or frequency point group of the reference signal;
information of a PCI or PCI group associated with the reference signal;
quasi co-location QCL information;
transmission configuration indicator TCI information;
a time domain pattern;
fourth indication information, configured to indicate that the reference signal is transmitted in a repetition or beam sweeping manner;
frequency domain information of the reference signal;
a time offset for transmitting or receiving the reference signal; or
a numerology of the reference signal; wherein
the QCL information or TCI information comprises at least one of the following:
a QCL source; or
a QCL type; and
the time domain pattern comprises at least one of the following:
an index of the reference signal;
a starting position of the reference signal; or
a length of a receiving time window of the reference signal.

11. The method according to any one of claims 1 to 10, wherein the transmitting, by the network-side device, the reference signal to the terminal comprises:
when a first condition is satisfied, transmitting, by the network-side device, the reference signal to the terminal, wherein the first condition comprises at least one of the following:
the network-side device activates a secondary cell corresponding to a second frequency;
the network-side device indicates deactivation of a secondary cell corresponding to a second frequency;
a first time interval since the network-side device transmitted a previous reference signal is greater than or equal to a first threshold;
a timer related to transmission of the reference signal expires;
the network-side device switches from a sleep state to an active state;
the network-side device detects that a terminal has lost synchronization; or
the network-side device triggers the terminal to report measurement information.

12. The method according to any one of claims 1 to 11, wherein the method further comprises:
monitoring, by the network-side device, feedback information of the terminal on the first frequency, wherein the feedback information is configured to indicate whether the terminal correctly receives the first information.

13. The method according to claim 12, wherein the method further comprises:
in a case that the received feedback information is an acknowledgment ACK, determining, by the network-side device, that the terminal correctly receives the first information;
in a case that the received feedback information is a negative acknowledgment NACK, determining, by the network-side device, that the terminal does not correctly receive the first information;
in a case that ACK feedback information is not received, determining, by the network-side device, that the terminal does not correctly receive the first information; and
in a case that NACK feedback information is not received, determining, by the network-side device, that the terminal correctly receives the first information.

14. The method according to claim 12, wherein
a resource position for reporting the feedback information is indicated by DCI or preconfigured by the network-side device; wherein
a second time interval between the resource position and the first information is less than or equal to a second threshold, or the second time interval is indicated by DCI, preconfigured by the network-side device, or predefined by a protocol.

15. The method according to any one of claims 1 to 14, wherein the transmitting, by the network-side device, the reference signal to the terminal comprises:
transmitting, by the network-side device, the reference signal to the terminal on a second frequency starting from a P-th first time unit thereon that overlaps or partially overlaps with a first time instant; or,
transmitting, by the network-side device, the reference signal to the terminal on the second frequency no earlier than the first time instant.

16. The method according to claim 15, wherein the first time instant is a time instant of a primary cell or an active cell corresponding to the first frequency; and
a starting boundary of the P-th first time unit overlaps or partially overlaps with the first time instant.

17. The method according to claim 15, wherein
the first time instant is slot n+k; wherein
n is a transmission time instant of the first information, or a transmission time instant or a reception time instant of the feedback information of the terminal; and
k comprises at least one of the following:
a processing time for feedback information on the first frequency;
a second processing time;
a time offset configured by RRC; or
a time offset indicated by the first information; wherein
the second processing time is predefined by a protocol or reported by the terminal.

18. The method according to any one of claims 1 to 17, wherein
taking effect of information indicated by the first information satisfies at least one of the following:
taking effect immediately in a current period;
taking effect starting after a second time unit;
taking effect starting at the transmission time instant of the first reference signal in a next period; or
taking effect in an X-th period after the current period; wherein X is an integer greater than 0.

19. The method according to any one of claims 1 to 18, wherein
in a case that the first information is configured to indicate transmission of an A-TRS, the first information is configured to activate transmission of the reference signal implicitly, or activate transmission of the reference signal explicitly; or,
in a case that the first information is configured to indicate transmission of the reference signal, the first information is configured to activate transmission of an A-TRS of a serving cell corresponding to the reference signal implicitly, or activate transmission of an A-TRS of a serving cell corresponding to the reference signal explicitly; wherein
the first information comprises indication information of the A-TRS; and
a transmission time of the reference signal is before or after a transmission time of the A-TRS.

20. The method according to any one of claims 1 to 19, wherein the transmitting, by the network-side device, the reference signal to the terminal comprises:
in a case that a second condition is satisfied, transmitting, by the network-side device, the reference signal to the terminal on the first frequency or the second frequency according to a default reference signal pattern or a conventional reference signal pattern; wherein
the second condition comprises at least one of the following:
an activation procedure of a serving cell corresponding to the second frequency is completed;
a first preset duration has elapsed since activation of a serving cell corresponding to the second frequency;
a second preset duration has elapsed since the network-side device transmitted the first information; or
a third preset duration has elapsed since the network-side device transmitted the reference signal.

21. The method according to any one of claims 1 to 19, wherein the transmitting, by the network-side device, the reference signal to the terminal comprises:
transmitting, by the network-side device, the reference signal to the terminal after the network-side device receives trigger information from the terminal.

22. The method according to claim 21, wherein the trigger information from the terminal comprises identification information of the network-side device.

23. The method according to claim 21 or 22, wherein before the network-side device transmits the reference signal to the terminal, the method further comprises: indicating, by the network-side device, that the terminal is allowed to transmit trigger information.

24. A method for receiving a reference signal, comprising:
receiving, by a terminal, first information transmitted by a network-side device; wherein the first information is configured to indicate transmission of a reference signal by the network-side device;
determining, by the terminal, according to the first information, whether to receive the reference signal transmitted by the network-side device.

25. The method according to claim 24, wherein the receiving, by a terminal, first information transmitted by a network-side device comprises: receiving, by the terminal, the first information transmitted by the network-side device on a first frequency.

26. The method according to claim 24 or 25, wherein the method further comprises:
in a case that the terminal determines to receive the reference signal transmitted by the network-side device, receiving, by the terminal, the reference signal transmitted by the network-side device.

27. The method according to claim 26, wherein the receiving, by the terminal, the reference signal transmitted by the network-side device comprises:
receiving, by the terminal, the reference signal transmitted by the network-side device on a first frequency or a second frequency.

28. The method according to any one of claims 24-27, wherein the method further comprises:
performing, by the terminal, a target operation based on the reference signal, wherein the target operation comprises at least one of the following: synchronization, measurement, or reporting.

29. The method according to claim 25, wherein the method further comprises:
transmitting, by the terminal, feedback information on a resource corresponding to the first frequency; wherein the feedback information is configured to indicate whether the terminal correctly receives the first information;
in a case that the terminal correctly receives the first information on the first frequency, the feedback information is ACK; and
in a case that the terminal does not correctly receive the first information on the first frequency, the feedback information is NACK.

30. The method according to claim 26 or 27, wherein the receiving, by the terminal, the reference signal transmitted by the network-side device comprises at least one of the following:
detecting, by the terminal, the reference signal starting from a starting boundary or ending boundary corresponding to a first time instant;
detecting, by the terminal, the reference signal starting from a second time instant;
detecting, by the terminal, the reference signal starting from a position offset by T time units from a third time instant or a fourth time instant on the first frequency; wherein T is predefined by a protocol, indicated by the network-side device, preconfigured by the network-side device, or configured by the network-side device; or
receiving, by the terminal, the reference signal on the second frequency within a first time window.

31. The method according to claim 30, wherein the detecting, by the terminal, the reference signal starting from a starting boundary or ending boundary corresponding to a first time instant comprises:
in a case that a cell corresponding to the second frequency is an unknown cell, and that the terminal receives the first information at a third time instant on a first frequency, detecting, by the terminal, the reference signal starting from a starting boundary or ending boundary corresponding to the first time instant; and
the detecting, by the terminal, the reference signal starting from a second time instant comprises:
in a case that a cell corresponding to the second frequency is a known cell, and that the terminal receives the first information at a fourth time instant on the first frequency, detecting, by the terminal, the reference signal starting from the second time instant.

32. The method according to claim 30 or 31, wherein
the fourth time instant is slot n1; and
the second time instant is slot n1+k1; wherein
the slot n1 is a time instant of a cell on the second frequency corresponding to the terminal receiving the first information or transmitting feedback information;
the slot n1+k1 is a time instant of the cell corresponding to the second frequency; and
k1 comprises at least one of the following:
a processing time for the feedback information; or
a third processing time; wherein
the third processing time is predefined by a protocol.

33. The method according to any one of claims 30 to 32, wherein
a starting position of the first time window is determined based on at least one of the following:
the first time instant;
the second time instant; or
a position offset by T time units from the third time instant or the fourth time instant; wherein
a length of the first time window satisfies at least one of the following:
the length of the first time window is predefined by a protocol, indicated by the network-side device, preconfigured by the network-side device, or configured by the network-side device;
the length of the first time window is related to a time domain pattern of the reference signal; or
the length of the first time window is related to time domain indication information of the reference signal.

34. The method according to any one of claims 24 to 33, wherein after the receiving, by the terminal, the reference signal or the first information transmitted by the network-side device, the method further comprises at least one of the following:
until the terminal receives next first information, ceasing to perform, by the terminal, reception of the reference signal, measurement of the reference signal, or synchronization based on the reference signal;
until the terminal receives next first information, performing, by the terminal, reception of the reference signal, measurement of the reference signal, or synchronization based on the reference signal according to a period or position preconfigured or configured by the network-side device or indicated by the first information;
in a case that the reference signal or the first information is related to cell activation, after cell activation or after a third time interval of cell activation, performing, by the terminal, reception of the reference signal, measurement of the reference signal, or synchronization based on the reference signal according to a period or position preconfigured or configured by the network-side device; or
in a case that the reference signal or the first information is related to cell deactivation, after cell deactivation or after a fourth time interval of cell deactivation, performing, by the terminal, reception of the reference signal, measurement of the reference signal, or synchronization based on the reference signal according to a period or position preconfigured or configured by the network-side device.

35. The method according to any one of claims 24 to 34, wherein
the first information is indicated according to at least one of the following granularities:
a serving cell; a serving cell group; a reference signal frequency point; a reference signal frequency point group; a physical cell identity PCI; a PCI group; a measurement object; a measurement object group; a beam; or a beam group.

36. The method according to any one of claims 24 to 35, wherein
the first information is carried by at least one of the following:
downlink control information DCI;
a medium access control control element MAC CE; or
a radio resource control RRC message.

37. The method according to claim 36, wherein
the DCI is at least one of the following: UE specific DCI or group common DCI; wherein
the UE specific DCI satisfies at least one of the following:
relevant information of the first information in the UE specific DCI is configured by the network-side device;
the UE specific DCI comprises relevant information of the first information; or
the UE specific DCI comprises a first indication field, configured to indicate the first information; wherein
the relevant information of the first information comprises at least one of the following: whether the UE specific DCI or the terminal supports transmission of an on-demand reference signal; information of a cell or cell group supporting an on-demand reference signal; or on-demand reference signal transmission configuration information;
the group common DCI satisfies at least one of the following:
a cyclic redundancy check CRC of the group common DCI is scrambled by a radio network temporary identifier identifying the reference signal;
one block in the group common DCI corresponds to one specific terminal; or
one block in the group common DCI corresponds to one granularity;
the group common DCI is configured to indicate at least one of the following: transmission of the reference signal; triggering transmission of the reference signal; cell activation; cell deactivation; synchronization; or measurement;
the group common DCI comprises a second indication field, configured to indicate that the group common DCI comprises the first information; and
a reference signal of a serving cell corresponding to the group common DCI is transmitted in an on-demand transmission mode.

38. The method according to claim 37, wherein
in a case that one block in the group common DCI corresponds to one granularity, the block comprises at least one of the following:
a third indication field, configured to indicate whether to transmit the reference signal; or
a fourth indication field, configured to indicate the type of the reference signal.

39. The method according to claim 36, wherein
the MAC CE is configured for at least one of the following:
activating transmission of the reference signal;
deactivating transmission of the reference signal;
activating a serving cell;
deactivating a serving cell;
activating transmission of a reference signal corresponding to the serving cell;
deactivating transmission of a reference signal corresponding to the serving cell;
activating transmission of an aperiodic tracking reference signal A-TRS; or
deactivating transmission of the A-TRS.

40. The method according to claim 36, wherein
secondary cell configuration information or secondary cell addition information in the RRC message serves as the first information; or,
secondary cell configuration information or secondary cell addition information in the RRC message comprises the first information.

41. The method according to any one of claims 24 to 40, wherein
the first information comprises at least one of the following:
first indication information, configured to indicate transmission or cancellation of transmission of the reference signal;
second indication information, configured to indicate whether the reference signal is configured for at least one of the following: cell activation, cell deactivation, synchronization, or measurement;
third indication information, configured to indicate whether the reference signal is a cell-defining reference signal or a non cell-defining reference signal;
information of a cell or cell group associated with the reference signal;
information of a measurement object MO, measurement ID, or MO group associated with the reference signal;
information of a frequency point or frequency point group of the reference signal;
information of a PCI or PCI group associated with the reference signal;
quasi co-location QCL information;
transmission configuration indicator TCI information;
a time domain pattern;
fourth indication information, configured to indicate that the reference signal is transmitted in a repetition or beam sweeping manner;
frequency domain information of the reference signal;
a time offset for transmitting or receiving the reference signal; or
a numerology of the reference signal; wherein
the QCL information or TCI information comprises at least one of the following:
a QCL source; or
a QCL type; and
the time domain pattern comprises at least one of the following:
an index of the reference signal;
a starting position of the reference signal; or
a length of a receiving time window of the reference signal.

42. The method according to any one of claims 24 to 41, wherein in a case that an indication from the network-side device that the terminal is allowed to transmit trigger information is received, the terminal transmits trigger information.

43. The method according to claim 42, wherein the trigger information comprises identification information of the network-side device.

44. An apparatus for transmitting a reference signal, comprising:
a first transmitting module, configured to transmit first information to a terminal; wherein the first information is configured to indicate transmission of a reference signal by a network-side device; and
a second transmitting module, configured to transmit the reference signal to the terminal.

45. An apparatus for receiving a reference signal, comprising:
a receiving module, configured to receive first information transmitted by a network-side device; wherein the first information is configured to indicate transmission of a reference signal by the network-side device; and
a determining module, configured to determine, according to the first information, whether to receive the reference signal transmitted by the network-side device.

46. A network-side device, comprising a processor and a memory, wherein the memory stores a program or an instruction executable on the processor, and when the program or instruction is executed by the processor, the steps of the method for receiving a reference signal according to any one of claims 1 to 23 are implemented.

47. A network-side device, comprising a processor and a communication interface, wherein
the communication interface is configured to transmit first information to a terminal; wherein the first information is configured to indicate transmission of a reference signal by the network-side device; and
the processor is configured to transmit the reference signal to the terminal.

48. A terminal, comprising a processor and a memory, wherein the memory stores a program or an instruction executable on the processor, and when the program or instruction is executed by the processor, the steps of the method for transmitting a reference signal according to any one of claims 24 to 43 are implemented.

49. A terminal, comprising a processor and a communication interface, wherein
the communication interface is configured to receive first information transmitted by a network-side device; wherein the first information is configured to indicate transmission of a reference signal by the network-side device; and
the processor is configured to determine, according to the first information, whether to receive the reference signal transmitted by the network-side device.

50. A readable storage medium, wherein a program or an instruction is stored on the readable storage medium, and when the program or instruction is executed by a processor, the method for transmitting a reference signal according to any one of claims 1 to 23 is implemented, or the steps of the method for receiving a reference signal according to any one of claims 24 to 43 are implemented.
